# EUROPÄISCHE PATENTSCHRIFT

(11) **EP 4 163 906 B1**
(45) Veröffentlichungstag und Bekanntmachung des Hinweises auf die Patenterteilung: **28.05.2025**
(21) Anmeldenummer: 22200075.4
(22) Anmeldetag: 06.10.2022
(51) Int. Cl.: G09F 9/302, G09F 9/33, H04N 5/222, H04N 5/262, H04N 23/90

(54) **HINTERGRUND-WIEDERGABEEINRICHTUNG**
BACKGROUND REPRODUCING DEVICE
DISPOSITIF DE REPRODUCTION D'ARRIÈRE-PLAN

(30) Priorität: 11.10.2021 DE 102021126307
(43) Veröffentlichungstag der Anmeldung: 12.04.2023
(73) Patentinhaber: Arnold & Richter Cine Technik GmbH & Co. Betriebs KG, 80807 München (DE)
(72) Erfinder: POPP, Hermann, 81574 München (DE)
(74) Vertreter: Manitz Finsterwald Patent- und Rechtsanwaltspartnerschaft mbB

(56) Entgegenhaltungen:
- WO-A1-2020/097212
- US-A1- 2007 176 854
- US-B2- 9 710 972
- ANONYMOUS: "The DARK BAYVirtual Production Stage was built to provide film and television series productions with a", ARRI, 10 June 2021 (2021-06-10), pages 1 - 10, XP055974820, Retrieved from the Internet <URL:https://www.arri.com/news-en/arri-supported-the-creation-of-the-dark-bay-virtual-production-stage> [retrieved on 20221026]

## Beschreibung

Die Erfindung betrifft eine Hintergrund-Wiedergabeeinrichtung für ein virtuelles Bildaufnahmestudio, welche dazu ausgebildet ist, hinter einem realen Motiv eine Darstellung eines virtuellen Hintergrunds für eine Kameraaufnahme wiederzugeben.

Derartige Hintergrund-Wiedergabeeinrichtungen können insbesondere dazu vorgesehen sein, in einem Bildaufnahmestudio eine Landschaft oder eine Umgebung wiederzugeben, in welcher eine Aufnahme mittels einer zugeordneten Kamera erfolgen soll und welche einen virtuellen Hintergrund für eine aufzunehmende Szene bildet. Dabei kann es sich bei dem Bildaufnahmestudio beispielsweise um ein Filmstudio zum Aufnehmen von Bewegtbildsequenzen oder um ein Fotostudio handeln, in welchem Einzelbilder bzw. Stillbilder aufgenommen werden. Generell kann eine derartige Aufnahme ein lokales Speichern von Bilddaten oder eine Übertragung an einen entfernten Ort (z.B. Broadcast, Streaming) umfassen. In dem virtuellen Bildaufnahmestudio kann somit ein virtueller Hintergrund bzw. eine virtuelle Umgebung geschaffen werden, in welcher sich ein Schauspieler während einer Bewegtbildaufnahme bewegen oder welche einen Hintergrund für eine Stillbildaufnahme bilden kann. Der im vorliegenden Zusammenhang genannte virtuelle Hintergrund umfasst also Bildinformation, die ein Hintergrundmotiv repräsentiert und deren Darstellung von einer zugeordneten Kamera als scheinbar reale Umgebung einer (Vordergrund-)Szene unmittelbar aufgenommen werden kann. Die Darstellung des virtuellen Hintergrunds "hinter" einem realen Motiv ist in diesem Zusammenhang umfassend zu verstehen, da die virtuelle Umgebung auch oberhalb oder unterhalb des realen Motivs vorgesehen sein kann.

Beispielsweise bei Bewegtbildaufnahmen kann eine Hintergrund-Wiedergabeeinrichtung zum Wiedergeben einer Darstellung eines virtuellen Hintergrunds zum Einsatz kommen, um eine Szene unmittelbar in der vorgesehenen Umgebung aufnehmen zu können. Insbesondere kann dadurch das Schauspiel erleichtert werden, da etwaige in dem virtuellen Hintergrund ablaufende Ereignisse von einem Schauspieler wahrgenommen werden können und der Schauspieler auf diese Ereignisse reagieren kann. Anders als beispielsweise bei der Verwendung eines Green-Screen, bei welchem die Umgebung für den Schauspieler nicht sichtbar ist, kann der Schauspieler sein Schauspiel somit an etwaige Hintergrundgeschehnisse anpassen und ein Regisseur, eine Kameraperson oder sonstige an einem Dreh beteiligte Personen kann bzw. können bereits während des Drehs einen Gesamteindruck der Szene gewinnen und die Szene beurteilen. Zudem können die gesamte Szene oder ein entsprechender Ausschnitt eines Films unmittelbar nach der Aufnahme angesehen und überprüft werden, ohne dass der für die Szene vorgesehene Hintergrund noch überlagert werden muss.

Bei Stillbildaufnahmen kann eine derartige Hintergrund-Wiedergabeeinrichtung beispielsweise dazu genutzt werden, in einem Bildaufnahmestudio und somit in einem kontrollierbaren Umfeld Fotografien in grundsätzlich beliebigen Umgebungen aufnehmen zu können und während des Fotografierens das entstehende Bild vollständig im Blick zu haben. Der Hintergrund und das reale Motiv bzw. eine zu fotografierende Person können somit optimal aufeinander abgestimmt werden bzw. zusammenwirken. Zudem kann das aufgenommene Foto unmittelbar angesehen werden, um gegebenenfalls erforderliche Anpassungen vornehmen zu können.

Eine Hintergrund-Wiedergabeeinrichtung zum Wiedergeben einer Darstellung eines virtuellen Hintergrunds für eine Kameraaufnahme ist beispielsweise in WO 2020/097212 A1 beschrieben.

US20070176854A1 beschreibt Display-Paneele für Unterhaltungs- und Architekturzwecke mit unregelmäßig angeordneten Pixeln zur Reduktion von Moiré-Effekten.

Zum Wiedergeben der Darstellung des virtuellen Hintergrunds können Hintergrund-Wiedergabeeinrichtungen insbesondere ein elektronisches Display mit einer aktiven Pixelmatrix bilden oder aufweisen und beispielsweise eine aktive Beleuchtungseinrichtung mit einer Vielzahl von aktiv leuchtenden Bildpunktelementen (Leuchtelementen) umfassen. Beispielsweise kann zur Wiedergabe einer Darstellung eines virtuellen Hintergrunds in einem virtuellen Bildaufnahmestudio eine LED-Wand zum Einsatz kommen, deren Leuchtdioden individuell und/oder in Gruppen benachbarter Leuchtdioden bzw. in Arrays von Leuchtdioden ansteuerbar sein können. Leuchtdioden einer solchen LED-Wand können als beispielsweise als LED (Light Emitting Diode) oder als OLED (Organic Light Emitting Diode bzw. organische Leuchtdiode) vorgesehen sein. Ferner können die Leuchtdioden Teil einer Flüssigkristallanzeige sein. Derartige Hintergrund-Wiedergabeeinrichtungen können sich beispielsweise über eine Breite von mindestens 5 m und eine Höhe von mindestens 2 m erstrecken, um mehrere Schauspieler vor einem gemeinsamen (virtuellen) Hintergrund aufnehmen zu können.

Darüber hinaus können Hintergrund-Wiedergabeeinrichtungen mehrere Paneele umfassen, an welchen die Bildpunktelemente angeordnet sind und welche gemeinsam die LED-Wand bilden. Während die Paneele, für welche auch der Begriff Panel geläufig ist, im Wesentlichen zweidimensional ausgebildet sein und sich die an einem Paneel angeordneten Bildpunktelemente in einer flächigen Anordnung erstrecken können, kann durch eine geeignete Anordnung mehrerer Paneele beispielsweise erreicht werden, dass die Hintergrund-Wiedergabeeinrichtung abschnittsweise gekrümmt und/oder gewölbt ausgebildet ist. Dadurch kann die Hintergrund-Wiedergabeeinrichtung beispielsweise sowohl hinter als auch über oder unter dem realen Motiv in dem virtuellen Bildaufnahmestudio angeordnet werden, um auch das unmittelbare Aufnehmen einer Darstellung eines virtuellen Himmels, einer virtuellen Decke eines Raums oder eines virtuellen Bodens in dem Bildaufnahmestudio zu ermöglichen. Alternativ zu einer LED-Wand kann eine Darstellung eines virtuellen Hintergrunds grundsätzlich auch durch Lichtpunkte erzeugt werden, die durch Reflektion oder Transmission an einer Lichtquellen-Wand, beispielsweise einer Leinwand für eine Rückprojektion, erzeugt werden. Die aktive Lichterzeugung kann dazu durch einen Projektor erfolgen, wobei an der Leinwand die Lichtquellen lediglich indirekt gebildet sind.

Insbesondere kann es eine derartige Hintergrund-Wiedergabeeinrichtung ermöglichen, durch entsprechendes Ansteuern der Bildpunktelemente einen virtuellen Hintergrund, der insbesondere eine dreidimensionale Szene repräsentieren kann, bildlich dazustellen und/oder durch Verändern der Ansteuerung während einer Aufnahme anzupassen. Eine Hintergrund-Wiedergabeeinrichtung bietet somit eine Möglichkeit, einen virtuellen Hintergrund für eine aufzunehmende Szene lebendig und leicht anpassbar darzustellen und dadurch insbesondere das Schauspiel oder die Gestik zu erleichtern.

Ein Problem bei einer Aufnahme einer solchen Darstellung eines virtuellen Hintergrunds kann sich jedoch dadurch ergeben, dass beim Abbilden der durch eine aktive Pixelmatrix wiedergegebenen Darstellung auf einen Bildsensor einer Kamera, welcher ebenfalls in einer Pixelmatrix aus mehreren Zeilen und mehreren dazu senkrechten Spalten angeordnete lichtempfindliche Sensorelemente aufweist, großflächige Interferenz- und Auslöschungseffekte in Bereichen entstehen können, in welchen sich die Raster der Pixelmatrix der Hintergrund-Wiedergabeeinrichtung und des Bildsensors überlagern. Diese Interferenz- und Auslöschungseffekte können bei einer folgenden Wiedergabe der mittels der Kamera erstellten Abbildung dazu führen, dass in den wiedergegebenen Abbildungen wiederkehrende geometrische Muster erkennbar sind, die in der tatsächlich aufgenommenen Szene bzw. dem virtuellen Bildaufnahmestudio nicht vorhanden sind und ungewünschte Artefakte der Überlagerung der beiden regelmäßigen Raster der Hintergrund-Wiedergabeeinrichtung und des Bildsensors darstellen. Solche Artefakte, die beispielsweise als Moiré- oder Alias-Effekt bekannt sind, können jedoch zur gänzlichen Unbrauchbarkeit des aufgenommenen Bildmaterials führen und daher die mittels einer Hintergrund-Wiedergabeeinrichtung zu erreichenden Vorteile gegebenenfalls vollständig konterkarieren.

Es ist daher eine Aufgabe der Erfindung, eine Hintergrund-Wiedergabeeinrichtung für ein virtuelles Bildaufnahmestudio zu schaffen, welche eine unmittelbare Kameraaufnahme einer Darstellung eines virtuellen Hintergrunds in einem virtuellen Bildaufnahmestudio ermöglicht, ohne dass geometrische Muster in einer Abbildung der Darstellung des virtuellen Hintergrunds durch Interferenzen zwischen einer Pixelmatrix der Hintergrund-Wiedergabeeinrichtung und einem Bildsensor der abbildenden Kamera entstehen.

Diese Aufgabe wird gelöst durch eine Hintergrund-Wiedergabeeinrichtung mit den Merkmalen des Anspruchs 1.

Die Hintergrund-Wiedergabeeinrichtung umfasst wenigstens ein Paneel mit einer Vielzahl von aktiv leuchtenden Bildpunktelementen. Die Bildpunktelemente bilden (zumindest in Projektion betrachtet) eine zweidimensionale Anordnung, welche sich entlang einer ersten Erstreckungsrichtung und einer dazu senkrecht ausgerichteten zweiten Erstreckungsrichtung erstreckt, wobei ein entlang der zweiten Erstreckungsrichtung gemessener jeweiliger Abstand der Bildpunktelemente zu einer ersten Referenzlinie, die entlang der ersten Erstreckungsrichtung geradlinig verläuft, entlang der ersten Erstreckungsrichtung unregelmäßig variiert.

Bei herkömmlichen Hintergrund-Wiedergabeeinrichtungen mit aktiv leuchtenden Bildpunktelementen ist es in der Regel vorgesehen, dass die aktiv leuchtenden Bildpunktelemente eine Pixelmatrix bilden und entlang des Paneels in einem regelmäßigen und strikt orthogonalen Raster angeordnet sind. Bei solchen Hintergrund-Wiedergabeeinrichtungen sind daher sämtliche entlang der ersten Erstreckungsrichtung oder der zweiten Erstreckungsrichtung hintereinander angeordneten Bildpunktelemente entlang einer Referenzlinie angeordnet, welche geradlinig entlang der ersten Erstreckungsrichtung bzw. der zweiten Erstreckungsrichtung verläuft. Bei solchen Hintergrund-Wiedergabeeinrichtungen kann somit eine erste Referenzlinie durch die Anordnung der Bildpunktelemente gelegt werden, welche entlang der ersten Erstreckungsrichtung hintereinander angeordnete Bildpunktelemente schneidet und zu welcher bezüglich der zweiten Erstreckungsrichtung gegenüber der ersten Referenzlinie versetzte Bildpunktelemente regelmäßige Abstände aufweisen, welche einem Rastermaß des regelmäßigen Rasters bezüglich der zweiten Erstreckungsrichtung entsprechen. Diese regelmäßige Anordnung kann jedoch, wie einleitend erläutert, zu Interferenz- oder Auslöschungseffekten beim Abbilden der Darstellung des virtuellen Hintergrunds auf einen Bildsensor einer Kamera führen, dessen lichtempfindlichen Sensorelemente ebenfalls in einem regelmäßigen orthogonalen Raster mehrerer Zeilen und Spalten angeordnet sind.

Um das Entstehen von Mustern durch eine Überlagerung solcher regelmäßiger Raster der Bildpunktelemente der Hintergrund-Wiedergabeeinrichtung und der Sensorelemente des Bildsensors der Kamera zu verhindern, sind die aktiv leuchtenden Bildpunktelemente bei der hierin offenbarten Hintergrund-Wiedergabeeinrichtung nicht strikt in einem orthogonalen Raster angeordnet, sondern weisen entlang der ersten Erstreckungsrichtung einen unregelmäßig variierenden Abstand zu einer sich entlang der ersten Erstreckungsrichtung geradlinig erstreckenden ersten Referenzlinie auf. Insbesondere können die Bildpunktelemente unregelmäßig um die erste Referenzlinie herum verteilt sein. Die erste Referenzlinie kann in diesem Zusammenhang eine gedachte Linie darstellen, welche entlang der ersten Erstreckungsrichtung geradlinig über das Paneel oder innerhalb der zweidimensionalen Anordnung der aktiv leuchtenden Bildpunktelemente verläuft. Die Bildpunktelemente bilden somit lediglich eine unregelmäßige zweidimensionale Anordnung.

Indem der Abstand der Bildpunktelemente entlang der zweiten Erstreckungsrichtung zu der ersten Referenzlinie unregelmäßig variiert, sind die Bildpunktelemente insbesondere nicht geradlinig entlang der ersten Erstreckungsrichtung hintereinander angeordnet, sondern bezüglich der ersten Erstreckungsrichtung hintereinander angeordnete Bildpunktelemente können bezüglich der zweiten Erstreckungsrichtung versetzt zueinander angeordnet sein. Insbesondere kann somit keine gedachte erste Referenzlinie durch die zweidimensionale Anordnung von Bildpunktelementen hindurchlegbar sein, welche sämtliche entlang der ersten Erstreckungsrichtung hintereinander angeordnete Bildpunktelemente schneidet. Zudem kann es vorgesehen sein, dass die erste Referenzlinie an einer bezüglich der zweiten Erstreckungsrichtung beliebigen Position durch die zweidimensionale Anordnung geführt sein kann, wobei ein entlang der zweiten Erstreckungsrichtung gemessener jeweiliger Abstand der Bildpunktelemente unabhängig von der Position der ersten Referenzlinien entlang der ersten Erstreckungsrichtung unregelmäßig variiert.

Durch die unregelmäßige Variation des Abstands der Bildpunktelemente zu der ersten Referenzlinie folgt dieser Abstand insbesondere keinem Muster, dessen Überlagerung mit einer regelmäßigen Anordnung von lichtempfindlichen Sensorelementen eines Bildsensors einer Kamera zu dem Entstehen von Artefakten in einer von der Kamera erzeugten Abbildung führen können. Vielmehr sind die Bildpunktelemente gegenüber einer geradlinigen Hintereinanderreihung entlang der ersten Erstreckungsrichtung unregelmäßig oder statistisch bezüglich der zweiten Erstreckungsrichtung verteilt, um eine regelmäßige Überlagerung mit dem regelmäßigen Raster des Bildsensors zu vermeiden. Insbesondere kann dazu innerhalb der unregelmäßig variierenden Abstände der Bildpunktelemente zu der ersten Referenzlinie kein wiederkehrendes Muster enthalten sein. Die Bildpunktelemente können dazu nicht nur nicht geradlinig entlang der ersten Erstreckungsrichtung aufgereiht sein, sondern Werte der gemessenen Abstände können eine vollständig unregelmäßige Folge bilden, welche nicht in mehrere wiederkehrende Zyklen unterteilbar ist.

Um das Entstehen von Artefakten in einer Abbildung mittels einer Kamera zuverlässig zu vermeiden, kann der Abstand der Bildpunktelemente zu der ersten Referenzlinie insbesondere zumindest über mehrere Bildpunktelemente hinweg unregelmäßig variieren. Es kann auch vorgesehen sein, dass der Abstand zu der ersten Referenzlinie über das ganze Paneel hinweg unregelmäßig variiert, so dass die Abstände zu der ersten Referenzlinie über das ganze Paneel hinweg kein wiederkehrendes Muster bilden können. Grundsätzlich kann es jedoch ausreichend sein, wenn die Abstände über eine ausreichend lange Referenzstrecke entlang der ersten Erstreckungsrichtung kein wiederkehrendes Muster bilden, welches zu dem Entstehen eines wahrnehmbaren Artefakts in einer von der Kamera erzeugten Abbildung führen könnte.

Als Bildpunktelemente in dem vorstehend erläuterten Sinne sind nicht unbedingt einzelne Bauelemente der Hintergrund-Wiedergabeeinrichtung zu verstehen, welche die lichtemittierenden Elemente möglicherweise tragen; derartige Bauelemente können auch in einer regelmäßigen Matrix angeordnet sein. Als Bildpunktelemente sind in dem vorliegenden Zusammenhang vielmehr die von einem Benutzer wahrnehmbaren bzw. von der Kamera als Bildinformation erfassten lichtemittierenden Flächenbereiche der Hintergrund-Wiedergabeeinrichtung zu verstehen.

Um die Darstellung des virtuellen Hintergrunds wiederzugeben, kann die Hintergrund-Wiedergabeeinrichtung ferner beispielsweise ein einziges Paneel aufweisen, welches insbesondere hinter einem Schauspieler oder einer zu fotografierenden Person zum Wiedergeben der Darstellung des virtuellen Hintergrunds aufgestellt sein kann. Die Hintergrund-Wiedergabeeinrichtung kann jedoch auch mehrere Paneele umfassen, die sich aneinander anschließend angeordnet sein können, so dass an jedem der mehreren Paneele ein jeweiliger Abschnitt der Darstellung des virtuellen Hintergrunds wiedergegeben werden kann. Derartige Paneele einer Hintergrund-Wiedergabeeinrichtung können insbesondere auch als Panels bezeichnet werden.

Weitere Ausführungsformen der Erfindung sind den abhängigen Ansprüchen, der Beschreibung sowie den Zeichnungen zu entnehmen.

Bei einigen Ausführungsformen kann ein entlang der zweiten Erstreckungsrichtung gemessener jeweiliger Abstand zwischen der ersten Referenzlinie und zu der ersten Referenzlinie benachbarten Bildpunktelementen entlang der ersten Erstreckungsrichtung unregelmäßig variieren. Beispielsweise können entlang der zweiten Erstreckungsrichtung hintereinander angeordnete Bildpunktelemente einen mittleren Abstand zueinander aufweisen, wobei zu der ersten Referenzlinie benachbarte Bildpunktelemente einen entlang der zweiten Erstreckungsrichtung gemessenen Abstand zu der ersten Referenzlinie aufweisen können, welcher kleiner als der mittlere Abstand der Bildpunktelemente entlang der zweiten Erstreckungsrichtung zueinander ist. Wird somit eine gedachte erste Referenzlinie durch die flächige Anordnung der Bildpunktelemente geführt, sind dieser Referenzlinie benachbarte Bildpunktelemente nicht entlang der Referenzlinie aufgereiht, sondern können einen unregelmäßig variierenden Abstand zu der Referenzlinie aufweisen. Bildpunktelemente, die bei einer Anordnung in einem regelmäßigen Raster durch eine erste Referenzlinie geschnitten werden können, können somit bei einigen Ausführungsformen statistisch um diese erste Referenzlinie verteilt sein.

Bei einigen Ausführungsformen kann die Hintergrund-Wiedergabeeinrichtung als eine LED-Wand ausgebildet sein, und die aktiv leuchtenden Bildpunktelemente können als Leuchtdioden oder als Leuchtdiodeneinheiten ausgebildet sein. Die Leuchtdioden einer solchen LED-Wand können beispielsweise als LED (Light Emitting Diode) oder als organische Leuchtdioden bzw. OLED (Organic Light Emitting Diode) ausgebildet sein.

Insbesondere kann es bei einer LED-Wand vorgesehen sein, dass die einzelnen Bildpunktelemente, welche gemeinsam die Darstellung des virtuellen Hintergrunds erzeugen, von einzelnen Leuchtdioden gebildet sind. Bei derartigen Ausführungsformen können die einzelnen Leuchtdioden einen unregelmäßig variierenden Abstand zu einer sich geradlinig erstreckenden Referenzlinie aufweisen, um eine unregelmäßige zweidimensionale Anordnung bilden. Bei einigen Ausführungsformen können die einzelnen Leuchtdioden mehreren unterschiedlichen Farben zugeordnet sein, d.h. es können mehrere Typen (z.B. drei, vier, fünf oder sechs) von einzelnen Leuchtdioden vorgesehen sein, die unterschiedliche vorbestimmte Emissionsspektren aufweisen, wobei die Leuchtdioden einer jeden der mehreren unterschiedlichen Farben eine unregelmäßige zweidimensionale Anordnung bilden. Beispielsweise kann die Hintergrund-Wiedergabeeinrichtung eine Vielzahl von rotes Licht emittierenden Leuchtdioden aufweisen, die (zumindest bezogen auf ein Paneel der Hintergrund-Wiedergabeeinrichtung) einen unregelmäßig variierenden Abstand zu einer sich geradlinig erstreckenden Referenzlinie aufweisen; die Hintergrund-Wiedergabeeinrichtung kann eine Vielzahl von grünes Licht emittierenden Leuchtdioden aufweisen, die einen unregelmäßig variierenden Abstand zu einer sich geradlinig erstreckenden Referenzlinie (derselben oder einer anderen Referenzlinie) aufweisen; und die Hintergrund-Wiedergabeeinrichtung kann eine Vielzahl von blaues Licht emittierenden Leuchtdioden aufweisen, die einen unregelmäßig variierenden Abstand zu einer sich geradlinig erstreckenden Referenzlinie aufweisen. Bei einigen Ausführungsformen können die einzelnen Leuchtdioden in Gruppen angeordnet sein, wobei jede Gruppe eine Leuchtdiode eines jeden der mehreren Typen (Farben) in räumlicher Nähe zueinander umfasst, wobei jedoch die Anordnung der Leuchtdioden innerhalb der jeweiligen Gruppe nicht einheitlich ist, d.h. einzelne Leuchtdioden desselben Typs weisen von Gruppe zu Gruppe einen unregelmäßig variierenden Abstand zu einer sich geradlinig erstreckenden Referenzlinie auf. Somit wird zumindest hierdurch die unregelmäßige zweidimensionale Anordnung der Bildpunktelemente (= einzelne Leuchtdioden) gebildet, selbst wenn die Gruppen (insgesamt) eine regelmäßige zweidimensionale Anordnung bilden.

Bei anderen Ausführungsformen können die einzelnen Bildpunktelemente von jeweiligen Leuchtdiodeneinheiten gebildet sein, wobei jede Leuchtdiodeneinheit insbesondere mehrere (z.B. zwei, drei, vier, fünf oder sechs) Leuchtdioden umfassen kann. Die mehreren Leuchtdioden einer Leuchtdiodeneinheit können insbesondere unterschiedliche Emissionsspektren aufweisen und optional mit einem Farbmischer ausgestattet sein. Ferner kann es bei einer solchen Leuchtdiodeneinheit vorgesehen sein, dass die einzelnen Leuchtdioden der Leuchtdiodeneinheit selektiv ansteuerbar sind, um eine gewünschte Farbe des von der Leuchtdiodeneinheit gebildeten Bildpunktelements zu erzeugen. Insbesondere kann eine Leuchtdiodeneinheit eine rotes Licht emittierende Leuchtdiode, eine grünes Licht emittierende Leuchtdiode und eine blaues Licht emittierende Leuchtdiode umfassen. Bei derartigen Ausführungsformen können die (vollständigen) Leuchtdiodeneinheiten einen unregelmäßig variierenden Abstand zu einer sich geradlinig erstreckenden Referenzlinie aufweisen, um eine unregelmäßige zweidimensionale Anordnung bilden.

Bei einigen Ausführungsformen kann es ferner vorgesehen sein, dass die Bildpunktelemente individuell ansteuerbar sind, um die Darstellung des virtuellen Hintergrunds zu erzeugen. Insbesondere kann durch das Ansteuern der Bildpunktelemente eine jeweilige Farbe und/oder Helligkeit des Bildpunktelements einstellbar sein, um einen durch das jeweilige Bildpunktelement wiedergegebenen Abschnitt oder Punkt der Darstellung des virtuellen Hintergrunds auf die vorgesehene Farbe und/oder Helligkeit einstellen zu können.

Die Hintergrund-Wiedergabeeinrichtung kann sich bei einigen Ausführungsformen in einer vertikalen und/oder horizontalen Ausrichtung erstrecken, insbesondere mit kontinuierlichen oder quasi-kontinuierlichen Übergängen. Beispielsweise kann es vorgesehen sein, dass sich die Hintergrund-Wiedergabeeinrichtung in einer vertikalen Ausrichtung plan hinter dem realen Motiv erstreckt, um die Darstellung des virtuellen Hintergrunds hinter dem realen Motiv wiederzugeben. Alternativ oder zusätzlich kann es jedoch auch vorgesehen sein, dass sich die Hintergrund-Wiedergabeeinrichtung zumindest abschnittsweise in einer horizontalen Ausrichtung erstreckt, so dass die Darstellung des virtuellen Hintergrunds beispielsweise auch über dem realen Motiv wiedergegeben werden kann. Zudem kann die Hintergrund-Wiedergabeeinrichtung dazu ausgebildet sein, das reale Motiv zu umgeben und zu überdecken, um eine möglichst vollständige Wiedergabe des virtuellen Hintergrunds über einen großen Winkelbereich zu ermöglichen. In einem Abschnitt, in welchem die Hintergrund-Wiedergabeeinrichtung von einer vertikalen in eine horizontale Ausrichtung übergeht, kann die Hintergrund-Wiedergabeeinrichtung auch gewölbt und/oder gekrümmt sein. Insbesondere bei einer Zusammensetzung der Hintergrund-Wiedergabeeinrichtung aus mehreren Paneelen können die Paneele zu verschiedenen und beispielsweise gewölbeartigen Geometrien zusammengesetzt sein, um eine gewünschte Umgebung für eine Aufnahme in dem virtuellen Bildaufnahmestudio zu schaffen. Ferner kann es bei einigen Ausführungsformen vorgesehen sein, dass die Hintergrund-Wiedergabeeinrichtung abschnittsweise an einem Boden des virtuellen Bildaufnahmestudios angeordnet ist. Auch in solchen Abschnitten kann sich die Hintergrund-Wiedergabeeinrichtung insbesondere in einer horizontalen Ausrichtung erstrecken.

Die Hintergrund-Wiedergabeeinrichtung kann bei einigen Ausführungsformen ferner dazu ausgebildet sein, das reale Motiv zu beleuchten. Insbesondere kann dies Hintergrund-Wiedergabeeinrichtung dazu dienen, das reale Motiv zusätzlich zu einer sonstigen Beleuchtung des virtuellen Bildaufnahmestudios zu beleuchten. Beispielsweise kann dadurch erreicht werden, dass des reale Motiv einen zu erwarteten Schatten wirft, wenn in dem virtuellen Hintergrund Beleuchtungsquellen, beispielsweise eine Straßenlaterne, enthalten ist, indem von der wiedergegebenen Darstellung der Straßenlaterne des virtuellen Hintergrunds die von einer realen Straßenlaterne zu erwartende Beleuchtung des realen Motivs ausgeht. Die Hintergrund-Wiedergabeeinrichtung kann jedoch auch dazu ausgebildet sein, abschnittsweise Licht zur Beleuchtung einer Szene zu emittieren und gewissermaßen als Scheinwerfer zu fungieren, während die Hintergrund-Wiedergabeeinrichtung an anderen Abschnitten die Darstellung des virtuellen Hintergrunds wiedergeben kann.

Bei einigen Ausführungsformen kann die Hintergrund-Wiedergabeeinrichtung dazu ausgebildet sein, die Darstellung des virtuellen Hintergrunds während der Aufnahme zeitlich zu variieren. Insbesondere können dadurch in dem virtuellen Hintergrund ablaufende Ereignisse während einer Kameraaufnahme unmittelbar mittels der Hintergrund-Wiedergabeeinrichtung wiedergegeben werden, so dass ein Schauspieler, anders als beispielsweise bei einer Greenscreen-Aufnahme, auf diese Ereignisse reagieren und das Schauspiel darauf abstimmen kann. Die Hintergrund-Wiedergabeeinrichtung kann folglich insbesondere dazu ausgebildet sein, während der Kameraaufnahme eine Filmsequenz wiederzugeben, welche von der Kamera unmittelbar aufgezeichnet werden kann. Ein nachträgliches Überlagern der Aufnahme der Kamera mit einem vorgesehenen Hintergrund ist somit nicht mehr erforderlich.

Die erste Erstreckungsrichtung kann bei einigen Ausführungsformen entlang der Horizontalen ausgerichtet sein und die zweite Erstreckungsrichtung kann bei einigen Ausführungsformen entlang der Vertikalen oder geneigt der Vertikalen ausgerichtet sein. Insbesondere kann die zweite Erstreckungsrichtung bei einer vertikalen Ausrichtung der Hintergrund-Wiedergabeeinrichtung entlang der Vertikalen ausgerichtet sein, während eine geneigte Ausrichtung der zweiten Erstreckungsrichtung bei einer geneigten Ausrichtung des wenigstens einen Paneels vorgesehen sein kann, um die Darstellung des virtuellen Hintergrunds beispielsweise über dem realen Motiv wiedergeben oder das reale Motiv von oben beleuchten zu können.

Bei einigen Ausführungsformen kann der jeweilige Abstand der Bildpunktelemente zu der ersten Referenzlinie entlang einer Referenzstrecke, die wenigstens 5 cm beträgt und/oder wenigstens 20 Bildpunktelemente umfasst, entlang der ersten Erstreckungsrichtung unregelmäßig variieren. Ferner kann der Abstand der Bildpunktelemente zu der ersten Referenzlinie bei einigen Ausführungsformen über die gesamte Ausdehnung des Paneels entlang der ersten Erstreckungsrichtung unregelmäßig variieren.

Durch eine unregelmäßige Variation der Abstände der Bildpunktelemente zu der ersten Referenzlinie entlang einer ausreichend langen Referenzstrecke kann zumindest bei gängigen Kameraeinstellungen und/oder Aufnahmebedingungen erreicht werden, dass in der von der Kamera erzeugten Abbildung keine wiederkehrenden und erkennbaren geometrischen Muster aufgrund einer Überlagerung eines regelmäßigen Musters der Anordnung der Bildpunktelemente mit der Anordnung der lichtempfindlichen Sensorelemente eines Bildsensors der Kamera entstehen. Beispielsweise kann sich die Variation der Abstände der Bildpunktelemente zu der ersten Referenzlinie dazu entlang aufeinanderfolgender Referenzstrecken wiederholen oder ein entlang der Referenzstrecke gebildetes Muster von Abständen kann entlang der folgenden Referenzstrecke beispielsweise um 180 Grad gedreht wiederholt werden. Durch solche Wiederholungen von über ausreichend lange Referenzstrecken unregelmäßigen Mustern kann insbesondere die Ansteuerung des Paneels erleichtert werden, indem Informationen über die Variation der Abstände der Bildpunktelemente zu der ersten Referenzlinie entlang einer Referenzstrecke ausreichend sein können, um sämtliche Abstände der Bildpunktelemente zu ersten Referenzlinie zu bestimmen. Zudem kann die Darstellung des virtuellen Hintergrunds dadurch in einer großflächig betrachtet regelmäßigen Anordnung von Bildpunktelementen wiedergegeben werden.

Alternativ dazu kann der Abstand der Bildpunktelemente zu der ersten Referenzlinie jedoch auch über die gesamte Ausdehnung des Paneels unregelmäßig variieren, so dass die Abstände der Bildpunktelemente zu der ersten Referenzlinie über die gesamte Ausdehnung des Paneels kein wiederkehrendes Muster bilden können. Eine solch großflächige oder vollständige Variation der Anordnung der Bildpunktelemente gegenüber der ersten Referenzlinie kann eine Überlagerung mit der Anordnung von Sensorelementen eines Bildsensors und in einer Abbildung der Darstellung des virtuellen Hintergrunds entstehende geometrische Muster zuverlässig verhindern.

Die Abstände der Bildpunktelemente zu der ersten Referenzlinie können ferner bei einigen Ausführungsformen normalverteilt sein. Insbesondere können die Abstände der Bildpunktelemente zu der ersten Referenzlinie bezogen auf die vorstehend erwähnte Referenzstrecke oder bezogen auf die gesamte Ausdehnung des Paneels entlang der ersten Erstreckungsrichtung normalverteilt sein. Die Bildpunktelemente können somit gegenüber der ersten Referenzlinie und insbesondere um die erste Referenzlinie herum statistisch verteilt sein, ohne dass die Verteilung einem regelmäßigen Muster folgt.

Bei einigen Ausführungsformen können die Abstände der Bildpunktelemente zu der ersten Referenzlinie entlang der ersten Erstreckungsrichtung kein Wiederholungsmuster bilden. Insbesondere können die Abstände der Bildpunktelemente zu der ersten Referenzlinie entlang der ersten Erstreckungsrichtung bezogen auf die Referenzstrecke oder bezogen auf die gesamte Ausdehnung des Paneels entlang der ersten Erstreckungsrichtung kein Wiederholungsmuster bilden. Zudem können Werte von entlang der ersten Referenzlinie gemessenen Abständen der Bildpunktelemente zu der ersten Referenzlinie keine wiederkehrende Zahlenfolge und/oder kein wiederkehrendes Wertepaar enthalten. Dies kann für Beträge der Abstände und/oder für Werte gelten, denen in Abhängigkeit von einer Lage des jeweiligen Bildpunktelements relativ zu der ersten Referenzlinie ein positives oder ein negatives Vorzeichen zugewiesen ist.

Bei einigen Ausführungsformen kann ein entlang der ersten Erstreckungsrichtung gemessener jeweiliger Abstand der Bildpunktelemente zu einer zweiten Referenzlinie, die entlang der zweiten Erstreckungsrichtung geradlinig verläuft, entlang der zweiten Erstreckungsrichtung unregelmäßig variieren. Auch die zweite Referenzlinie kann insbesondere einer gedachten, sich entlang der zweiten Erstreckungsrichtung über das Paneel erstreckenden Linie entsprechen. Die auf die erste Erstreckungsrichtung bezogenen Abstände der Bildpunktelemente zu der zweiten Referenzlinie können insbesondere über mehrere Bildpunktelemente hinweg unregelmäßig variieren und/oder ein jeweiliger entlang der ersten Erstreckungsrichtung gemessener Abstand zwischen der zweiten Referenzlinie und zu der zweiten Referenzlinie benachbarten Bildpunktelementen kann entlang der zweiten Erstreckungsrichtung unregelmäßig variieren. Ferner kann der jeweilige Abstand der Bildpunktelemente zu der zweiten Referenzlinie entlang einer Referenzstrecke, die wenigstens 5 cm beträgt und/oder wenigstens 20 Bildpunktelemente umfasst, entlang der zweiten Erstreckungsrichtung unregelmäßig variieren und/oder der jeweilige Abstand kann über die gesamte Ausdehnung des Paneels entlang der zweiten Erstreckungsrichtung unregelmäßig variieren.

Indem ein jeweiliger Abstand der Bildpunktelemente zu einer ersten Referenzlinie und zu einer zweiten Referenzlinie unregelmäßig variieren kann, kann die Anordnung der Bildpunktelemente letztlich zweidimensional unregelmäßig im Vergleich zu einem bezüglich der ersten Erstreckungsrichtung und der zweiten Erstreckungsrichtung regelmäßigen orthogonalen Raster sein. Insofern können die Bildpunktelemente in keiner der Richtungen, entlang welcher die lichtempfindlichen Sensorelemente eines Bildsensors einer Kamera herkömmlicherweise regelmäßig angeordnet sind, ein regelmäßiges Muster bilden und/oder in einem regelmäßigen Raster angeordnet sein, dessen Überlagerung mit dem Raster des Bildsensors zu ungewünschten Artefakten in einer Abbildung der Hintergrund-Wiedergabeeinrichtung führen kann. Insbesondere können die Bildpunktelemente somit gegenüber einer herkömmlichen Anordnung von Bildpunktelementen in einem regelmäßigen und strikt orthogonalen Raster in beiden Dimensionen statistisch verteilt sein.

Bei einigen Ausführungsformen können die Abstände der Bildpunktelemente zu der zweiten Referenzlinie normalverteilt sein. Insbesondere können die Bildpunktelemente somit statistisch gegenüber der und/oder um die zweite Referenzlinie herum verteilt angeordnet sein, ohne dass die Anordnung der Bildpunktelemente einem regelmäßigen Muster folgt.

Ferner weist das Paneel erfindungsgemäß eine der Vielzahl von Bildpunktelementen entsprechende Anzahl von separaten Bildpunkteinheiten auf, die eine regelmäßige Anordnung bilden, wobei jede Bildpunkteinheit einen exzentrischen lichtemittierenden Flächenbereich aufweist, der einem jeweiligen Bildpunktelement entspricht und der jedoch bezüglich eines geometrischen Zentrums der Bildpunkteinheit exzentrisch angeordnet ist. Die Ausrichtung des jeweiligen exzentrischen lichtemittierenden Flächenbereichs, insbesondere die Winkelausrichtung, variiert dabei entlang der regelmäßigen Anordnung von Bildpunkteinheiten.

Beispielsweise können solche Bildpunkteinheiten einen quadratischen, sechseckigen oder achteckigen Umriss aufweisen, um in einer schachbrettartigen und/oder wabenartigen regelmäßigen Anordnung an dem Paneel angeordnet werden zu können. Die Bildpunkteinheiten können insbesondere in einem regelmäßigen, beispielsweise orthogonalen, Raster angeordnet sein, wobei jedoch durch eine unregelmäßig variierende Ausrichtung der Bildpunkteinheiten, die insofern beispielsweise gegeneinander verdreht angeordnet sein können, die jeweiligen lichtemittierenden Flächenbereiche und entsprechend die Bildpunktelemente mit einem unregelmäßig variierenden Abstand zu einer sich entlang der ersten Erstreckungsrichtung und/oder entlang der zweiten Erstreckungsrichtung erstreckenden Referenzlinie angeordnet werden können. Beispielsweise kann eine solche Referenzlinie zwischen zwei jeweiligen Bildpunkteinheiten angeordnet sein, so dass bezüglich der Referenzlinie innenliegende Ränder der Bildpunkteinheit auf der Referenzlinie liegen können, wobei die jeweiligen lichtemittierenden Flächenbereiche durch die variierende Ausrichtung der Bildpunkteinheiten mit variierendem Abstand zu der Referenzlinie angeordnet sein können. Alternativ oder zusätzlich kann auch ein Abstand der jeweiligen exzentrischen lichtemittierenden Flächen gegenüber dem geometrischen Zentrum der Bildpunkteinheit variieren, um die Bildpunktelemente in einem unregelmäßig variierenden Abstand zu der ersten Referenzlinie und/oder einer zweiten Referenzlinie anordnen zu können.

Derartige Bildpunkteinheiten können ferner miteinander und/oder an einem Träger mechanisch verbunden sein, um das Paneel der Hintergrund-Wiedergabeeinrichtung zu bilden. Ferner kann zwischen den mehreren Bildpunkteinheiten eine signaltechnische Verbindung bestehen, um die jeweiligen Bildpunktelemente der Bildpunkteinheiten ansteuern und die Darstellung des virtuellen Hintergrunds wiedergeben zu können.

Wie vorstehend bereits erläutert, können die Bildpunktelemente insbesondere als Leuchtdioden oder als Leuchtdiodeneinheiten ausgebildet sein, so dass die Bildpunkteinheiten beispielsweise eine jeweilige exzentrisch angeordnete Leuchtdiode aufweisen können. Ferner können an den Bildpunkteinheiten mehrere Leuchtdioden, die eine Leuchtdiodeneinheit bilden, exzentrisch angeordnet sein, wobei die Leuchtdioden einer Leuchtdiodeneinheit als Gruppe von Leuchtdioden exzentrisch an der Bildpunkteinheit und beispielsweise gemeinsam in einem Eckabschnitt einer quadratischen Bildpunkeinheit angeordnet sein können.

Bei einigen Ausführungsformen kann die zweidimensionale Anordnung durch mehrere sich entlang der ersten Erstreckungsrichtung erstreckende und in regelmäßigem Abstand zueinander angeordnete erste Referenzlinien unterteilbar sein, wobei der regelmäßige Abstand einem Mittelwert von Abständen entsprechen kann, welche entlang der zweiten Erstreckungsrichtung benachbarte Bildpunktelemente zueinander aufweisen. Ferner kann jedes der Vielzahl von Bildpunktelementen einer jeweiligen ersten Referenzlinie zuweisbar sein, zu welcher das Bildpunktelement bezogen auf die zweite Erstreckungsrichtung benachbart ist, wobei ein Abstand zwischen jeder der mehreren ersten Referenzlinien und den jeweiligen zugewiesenen Bildpunktelementen entlang der ersten Erstreckungsrichtung unregelmäßig variieren kann.

Bei Annahme eines herkömmlichen regelmäßigen Rasters zumindest entlang der ersten Erstreckungsrichtung kann die zweidimensionale Anordnung der Bildpunktelemente grundsätzlich durch mehrere erste Referenzlinien mit einem regelmäßigen Abstand zueinander unterteilt werden, welcher - bei einem regelmäßigen Raster - dem regelmäßigen Abstand zwischen zwei entlang der zweiten Erstreckungsrichtung benachbarten Bildpunktelementen entspricht. Bei einem regelmäßigen Raster liegen entsprechend sämtliche Bildpunktelemente auf einer solchen ersten Referenzlinie, wenn die ersten Referenzlinien einen Abstand entlang der zweiten Erstreckungsrichtung zueinander aufweisen, welcher dem Abstand der entlang der zweiten Erstreckungsrichtung benachbarten Bildpunktelemente zueinander entspricht.

Bei den vorstehend erwähnten Ausführungsformen kann jedoch kein solches Raster von mehreren parallelen ersten Referenzlinien derart gebildet werden, dass sämtliche Bildpunktelemente auf einer ersten Referenzlinie liegen oder dass sämtliche Bildpunktelemente von den ersten Referenzlinien geschnitten werden. Vielmehr sind die einer jeweiligen Referenzlinie benachbarten Bildpunktelemente, welche bei einer regelmäßigen Anordnung auf der ersten Referenzlinie liegen, bei diesen Ausführungsformen bezüglich der zweiten Erstreckungsrichtung beabstandet zu den ersten Referenzlinien angeordnet, wobei der Abstand zwischen den ersten Referenzlinien und den zugewiesenen Bildpunktelementen entlang der ersten Erstreckungsrichtung unregelmäßig variiert. Zumindest entlang der ersten Erstreckungsrichtung können die Bildpunktelemente somit bei solchen Ausführungsformen statisch gegenüber einem regelmäßigen Raster verteilt sein, so dass die Bildpunktelemente entlang der ersten Erstreckungsrichtung betrachtet kein regelmäßiges Muster bilden.

Ferner kann bei einigen Ausführungsformen eine Anzahl der mehreren ersten Referenzlinien einer Anzahl von Bildpunktelementen entsprechen, welche in der zweidimensionalen Anordnung entlang der zweiten Erstreckungsrichtung hintereinander angeordnet sind. Grundsätzlich können die entlang der zweiten Erstreckungsrichtung hintereinander angeordneten Bildpunktelemente bezüglich der ersten Erstreckungsrichtung versetzt und/oder statistisch verteilt angeordnet sein, so dass die entlang der zweiten Erstreckungsrichtung hintereinander angeordneten Bildpunktelemente nicht zwangsläufig entlang einer geraden Linie aufgereiht sein müssen.

Insbesondere kann somit eine Anzahl von ersten Referenzlinien über die zweidimensionale Anordnung von Bildpunktelementen legbar sein, welche der Anzahl von ersten Referenzlinien eines bei herkömmlichen Hintergrund-Wiedergabeeinrichtungen regelmäßigen Rasters entspricht. Jedoch lassen sich bei solchen Ausführungsformen keine ersten Referenzlinien dieser Anzahl und des erwarteten regelmäßigen Abstands finden, so dass sämtliche der Bildpunktelemente auf einer jeweiligen Referenzlinie liegen. Vielmehr können die Bildpunktelemente gegenüber dem erwarteten regelmäßigen Raster zumindest bezüglich der zweiten Erstreckungsrichtung statistisch verteilt sein.

Bei einigen Ausführungsformen kann es vorgesehen sein, dass ein mittlerer Abstand zwischen den Bildpunktelementen und der jeweiligen zugewiesenen ersten Referenzlinie der mehreren ersten Referenzlinien kleiner als ein Drittel des regelmäßigen Abstands oder kleiner als ein Zehntel des regelmäßigen Abstands ist. Während somit der Abstand zwischen den Bildpunktelementen und der jeweiligen zugewiesenen ersten Referenzlinie statistisch und/oder unregelmäßig entlang der ersten Erstreckungsrichtung variieren kann, können die Bildpunktelemente im Mittel regelmäßig verteilt sein oder großflächig betrachtet zumindest regelmäßig verteilt erscheinen. Dies kann insbesondere die Kompatibilität der Hintergrund-Wiedergabeeinrichtung mit bestehenden Systemen zum Generieren eines virtuellen Hintergrunds erhöhen, da insbesondere etwaige Berechnungen zur Transformation einer Darstellung auf die unregelmäßige zweidimensionale Anordnung von Bildpunktelementen bei einer im Mittel oder großflächig regelmäßig erscheinenden Anordnung möglichst einfach durchgeführt werden oder sogar entfallen können, ohne dass erkennbare Verzerrungen in der wiedergegebenen Darstellung des virtuellen Hintergrunds entstehen.

Bei einigen Ausführungsformen kann eine Verteilung der variierenden Abstände zwischen den mehreren ersten Referenzlinien und den jeweiligen zugewiesenen Bildpunktelementen einer Normalverteilung entsprechen. Insbesondere können die Abstände zwischen sämtlichen Bildpunktelementen und der jeweiligen zugewiesenen Referenzlinie normalverteilt sein, so dass die Bildpunktelemente insgesamt entlang der ersten Erstreckungsrichtung statistisch gegenüber einem regelmäßigen Raster verteilt sein können. Zudem können die Bildpunktelemente rein statistisch in der zweidimensionalen Anordnung verteilt sein, ohne einem vorbestimmten Muster zu folgen.

Die Normalverteilung kann bei einigen Ausführungsformen mit einem Erwartungswert von Null verträglich sein. Ferner kann die Normalverteilung insbesondere einen Erwartungswert von Null aufweisen. Beispielsweise kann die Normalverteilung der variierenden Abstände mit einem Vertrauensniveau von 1 σ, 2 σ oder 3 σ mit einem Erwartungswert von Null verträglich sein. Die Bildpunktelemente können folglich derart um die ersten Referenzlinien verteilt sein, dass die Bildpunktelemente entlang der ersten Erstreckungsrichtung im großflächigen Mittel einem regelmäßigen Raster folgen. Wiederum kann dadurch eine möglichst hohe Kompatibilität mit bestehenden Systemen erreicht werden.

Bei einigen Ausführungsformen kann die zweidimensionale Anordnung ferner durch mehrere sich entlang der zweiten Erstreckungsrichtung erstreckende und in regelmäßigem Abstand zueinander angeordnete zweite Referenzlinien unterteilbar sein, wobei der regelmäßige Abstand der zweiten Referenzlinien einem Mittelwert von Abständen entsprechen kann, welche entlang der ersten Erstreckungsrichtung benachbarte Bildpunktelemente zueinander aufweisen. Ferner kann jedes der Vielzahl von Bildpunktelementen einer jeweiligen zweiten Referenzlinie zuweisbar sein, zu welcher das Bildpunktelement bezogen auf die erste Erstreckungsrichtung benachbart ist, wobei ein Abstand zwischen jeder der mehreren zweiten Referenzlinien und den jeweiligen zugewiesenen Bildpunktelementen entlang der zweiten Erstreckungsrichtung unregelmäßig variieren kann.

Wie vorstehend bereits für parallel zueinander und entlang der ersten Erstreckungsrichtung verlaufende erste Referenzlinien erläutert, können die Bildpunktelemente somit insbesondere entlang der zweiten Erstreckungsrichtung betrachtet gegenüber einem regelmäßigen Raster statistisch und/oder unregelmäßig verteilt angeordnet sein. Bei solchen Ausführungsformen können die Bildpunktelemente daher insbesondere entlang der ersten Erstreckungsrichtung kein regelmäßiges Muster bilden.

Ferner können die benachbarten Bildpunktelemente bei einigen Ausführungsformen gegenüber den vorstehend bereits erwähnten mehreren ersten Referenzlinien und gegenüber den mehreren zweiten Referenzlinien mit jeweiligen unregelmäßig variierenden Abständen angeordnet sein, so dass die Bildpunktelemente in zwei Dimensionen statisch verteilt gegenüber einem regelmäßigen Raster, insbesondere einem orthogonalen Raster, angeordnet sein können.

Eine Anzahl der mehreren zweiten Referenzlinien kann bei einigen Ausführungsformen eine Anzahl von Bildpunktelementen entsprechen, welche in der zweidimensionalen Anordnung entlang der zweiten Erstreckungsrichtung hintereinander angeordnet sind. Wiederum kann somit eine Anzahl parallel zueinander ausgerichteter zweiter Referenzlinien auf die zweidimensionale Anordnung von Bildpunktelementen gelegt werden, so dass bei einer regelmäßigen Anordnung der Bildpunktelemente sämtliche Bildpunktelemente auf einer jeweiligen zweiten Referenzlinien liegen würden. Jedoch können die Abstände der jeweiligen benachbarten Bildpunktelemente zu sämtlichen dieser zweiten Referenzlinien unregelmäßig variieren, um die Überlagerung eines Musters der zweidimensionalen Anordnung und eines Musters von lichtempfindlichen Sensorelementen eines Bildsensors zu verhindern.

Bei einigen Ausführungsformen kann ein mittlerer Abstand zwischen den Bildpunktelementen und der jeweiligen zugewiesenen zweiten Referenzlinie der mehreren zweiten Referenzlinien kleiner als ein Drittel des regelmäßigen Abstands der zweiten Referenzlinien zueinander oder kleiner als ein Zehntel des regelmäßigen Abstands der zweiten Referenzlinien zueinander sein.

Ferner kann eine Verteilung der variierenden Abstände zwischen den mehreren zweiten Referenzlinien und den jeweiligen zugewiesenen Bildpunktelementen bei einigen Ausführungsformen einer zweiten Normalverteilung entsprechen.

Die zweite Normalverteilung kann zudem bei einigen Ausführungsformen mit einem Erwartungswert von Null verträglich sein. Insbesondere kann die zweite Normalverteilung einen Erwartungswert von Null aufweisen.

Wie vorstehend bereits für Ausführungsformen mit variierenden Abständen benachbarter Bildpunktelemente zu mehreren ersten Referenzlinien erläutert, können die Bildpunktelemente somit insbesondere gegenüber den mehreren zweiten Referenzlinien statistisch verteilt sein, ohne einem Muster zu folgen. Zudem kann die Verteilung gegenüber den mehreren zweiten Referenzlinien im großflächigen Mittel als eine regelmäßige Struktur erscheinen, um eine Ansteuerung durch herkömmliche Systeme zu erleichtern.

Bei einigen Ausführungsformen kann die Hintergrund-Wiedergabeeinrichtung eine Steuereinrichtung aufweisen, welche mit einem Speicher verbunden ist, in dem der virtuelle Hintergrund als eine Darstellung in einem regelmäßigen Raster bereitgestellt ist. Die Steuereinrichtung kann dazu ausgebildet sein, den bereitgestellten virtuellen Hintergrund auf Koordinaten der Bildpunktelemente in der (unregelmäßigen) zweidimensionalen Anordnung zu transformieren.

Alternativ oder zusätzlich kann die Steuereinrichtung auch dazu ausgebildet sein, den virtuellen Hintergrund zu generieren und auf ein regelmäßiges Raster abzubilden. Insbesondere kann die Steuereinrichtung dazu eine Projektion eines dreidimensionalen Modells des virtuellen Hintergrunds auf zwei Dimensionen erstellen. Die Steuereinrichtung kann sodann dazu ausgebildet sein, den abgebildeten und insofern in einem regelmäßigen Raster bereitgestellten Hintergrund auf die Koordinaten der Bildpunktelemente in der (unregelmäßigen) zweidimensionalen Anordnung zu transformieren.

Beispielsweise kann der virtuelle Hintergrund in einer regelmäßigen Pixelmatrix zur Verfügung gestellt werden, so dass der virtuelle Hintergrund an einer herkömmlichen Hintergrund-Wiedergabeeinrichtung, an welcher die Bildpunktelemente in einem entsprechend regelmäßigen Raster angeordnet sind, unmittelbar wiedergegeben werden kann. Indem bei der hierin offenbarten Hintergrund-Wiedergabeeinrichtung die Bildpunktelemente jedoch zumindest entlang der ersten Erstreckungsrichtung, insbesondere jedoch entlang beider Erstreckungsrichtungen, unregelmäßig gegenüber einem solchen Raster verteilt sein können, kann eine unmittelbare Wiedergabe des virtuellen Hintergrunds in dem regelmäßigen Raster ohne Berücksichtigung der Verschiebungen der Bildpunktelemente der Hintergrund-Wiedergabeeinrichtung zu einer verzerrten Darstellung des virtuellen Hintergrunds führen. Insbesondere können etwa bei einer unmittelbaren Zuordnung von Bildpunkten des in dem regelmäßigen Raster bereitgestellten virtuellen Hintergrund zu jeweiligen Bildpunktelementen die Bildpunkte an der Hintergrund-Wiedergabeeinrichtung an einer gegenüber dem regelmäßigen Raster versetzten Position wiedergegeben werden, so dass sich die Darstellung des virtuellen Hintergrunds mittels der Hintergrund-Wiedergabeeinrichtung von dem bereitgestellten virtuellen Hintergrund unterscheiden kann. Durch eine entsprechende Transformation, bei welcher beispielsweise ermittelt werden kann, welcher Bildpunkt des in dem regelmäßigen Raster bereitgestellten virtuellen Hintergrunds einem jeweiligen Bildpunktelement am nächsten ist, um diesen nächsten Bildpunkt an dem jeweiligen Bildpunktelement wiederzugeben, kann hingegen der in dem regelmäßigen Raster bereitgestellte virtuelle Hintergrund möglichst detailliert und unverzerrt an der unregelmäßigen zweidimensionalen Anordnung der Bildpunktelemente dargestellt werden.

Die Koordinaten der Vielzahl von Bildpunktelementen können bei einigen Ausführungsformen in dem Speicher gespeichert und/oder in den Speicher einschreibbar sein. Beispielsweise kann der Speicher Teil des Paneels sein, so dass Informationen über die zweidimensionale Anordnung und insbesondere die Koordinaten der Bildpunktelemente herstellerseitig in den Speicher einschreibbar und in dem Speicher gespeichert zur Verfügung gestellt werden können. Dies kann insbesondere bei standardisierten Paneelen vorgesehen sein, welche stets dieselbe, jedoch unregelmäßige Anordnung von Bildpunktelementen aufweisen können. Es kann jedoch auch vorgesehen sein, dass eine unregelmäßige Anordnung von Bildpunktelementen bzw. deren Koordinaten von einem Benutzer in den Speicher einschreibbar ist.

Grundsätzlich kann es sich bei dem Speicher, in welchem die Koordinaten zur Verfügung gestellt sind, um dasselbe physische Element handeln, in welchem auch der Hintergrund in einem regelmäßigen Raster bereitgestellt ist, oder es können physisch getrennte Einheiten vorgesehen sein, um einerseits den Hintergrund in dem regelmäßigen Raster und andererseits die Koordinaten der Vielzahl von den Bildpunktelementen bereitstellen zu können, wobei die Steuereinrichtung auf diese getrennten Einheiten zugreifen kann. Insbesondere kann/können der Speicher oder die Speicher als nichtflüchtige Speicher und/oder als Halbleiterspeicher ausgebildet sein.

Indem die Koordinaten der Vielzahl von Bildpunktelementen in dem Speicher gespeichert sind, kann die Steuereinrichtung sowohl auf die Koordinaten der Bildpunktelemente als auch auf das regelmäßige Raster, in welchem der virtuelle Hintergrund bereitgestellt ist, zurückgreifen, um die erforderliche Transformation durchzuführen. Dazu kann auch der virtuelle Hintergrund in dem Speicher mit jeweiligen Koordinaten von Bildpunkten des regelmäßigen Rasters bereitgestellt sein.

Bei einigen Ausführungsformen kann die Steuereinrichtung dazu ausgebildet sein, mittels der Transformation anhand des in dem regelmäßigen Raster bereitgestellten virtuellen Hintergrunds einen jeweiligen Farbwert und/oder einen jeweiligen Helligkeitswert für die Bildpunktelemente zu ermitteln. Beispielsweise kann die Steuereinrichtung eine Position eines jeweiligen Bildpunktelements bei einer Projektion auf den in dem regelmäßigen Raster bereitgestellten virtuellen Hintergrund ermitteln, um dem Bildpunktelement einen Farbwert und/oder einen Helligkeitswert eines dieser Position benachbarten Bildpunktes in dem regelmäßigen Raster zuzuweisen. Die Steuereinrichtung kann jedoch auch dazu ausgebildet sein, die Farbwerte und/oder Helligkeitswerte für die Bildpunktelemente durch Interpolationsverfahren zu ermitteln, bei welchen die Farbwerte und/oder Helligkeitswerte mehrerer der ermittelten Position benachbarter Bildpunkte berücksichtigt werden. Die Steuereinrichtung kann zudem dazu ausgebildet sein, die Bildpunktelemente zum Wiedergeben der ermittelten Farbwerte und/oder Helligkeitswerte anzusteuern.

Die Steuereinrichtung kann bei einigen Ausführungsformen dazu ausgebildet sein, den bereitgestellten virtuellen Hintergrund durch eine Methode der nächsten Nachbarschaft (next neighbour), eine bilineare Interpolation und/oder eine bikubische Interpolation auf die zweidimensionale Anordnung der Bildpunktelemente zu transformieren.

Beispielsweise kann die Steuereinrichtung dazu ausgebildet sein, eine Position eines jeweiligen Bildpunktelements in dem regelmäßigen Raster des virtuellen Hintergrunds zu bestimmen. Durch Verwenden einer Methode der nächsten Nachbarschaft kann die Steuereinrichtung sodann ermitteln, welchem Bildpunkt in dem regelmäßigen Raster des virtuellen Hintergrunds die Position des Bildpunktelements am nächsten ist, um diesen nächsten Bildpunkt, insbesondere dessen Farbe und/oder Helligkeit, mittels des Bildpunktelements wiederzugeben zu können.

Bei einer Verwendung einer bilinearen Interpolation kann die Steuereinrichtung hingegen dazu ausgebildet sein, zwischen vier zu der ermittelten Position eines Bildpunktelements benachbarten Bildpunkten in dem regelmäßigen Raster des virtuellen Hintergrunds linear zu interpolieren, um einen dadurch ermittelten Farbwert und/oder Helligkeitswert mittels des Bildpunktelements wiedergeben zu können. Bei einer bikubischen Interpolation können die Werte von 4 x 4 benachbarten Bildpunkten genutzt werden, um zu bestimmen, wie das jeweilige Bildpunktelement anzusteuern ist. Grundsätzlich kann die jeweilige Methode zur Transformation auch wählbar sein, so dass die Methode beispielsweise in Abhängigkeit von der zur Verfügung stehenden Zeit und/oder der zur Verfügung stehenden Rechenleistung und/oder bestehender Genauigkeitsanforderungen an die Darstellung des virtuellen Hintergrunds wählbar sein kann.

Ferner kann der virtuelle Hintergrund bei einigen Ausführungsformen als Modell in dem Speicher bereitgestellt sein. Wie bereits erläutert, kann die Steuereinrichtung in diesem Fall insbesondere dazu ausgebildet sein, den virtuellen Hintergrund anhand des Modells zu erstellen und/oder auf ein zweidimensionales regelmäßiges Raster abzubilden.

Beispielsweise kann die Steuereinrichtung zum Generieren des virtuellen Hintergrunds eine Game-Engine umfassen. Dazu kann die Steuereinrichtung mit einem Speicher verbunden sein, in welchem eine oder mehrere Datenbanken gespeichert sein können, in welchen der virtuelle Hintergrund als ein oder mehrere Modelle gespeichert sein kann. Die Steuereinrichtung kann ferner dazu ausgebildet sein, den virtuellen Hintergrund in Abhängigkeit von einer Position und/oder einer Blickrichtung der Kamera durch Verwenden der Game-Engine zu erstellen, indem - ähnlich wie bei einem PC-Spiel in Abhängigkeit von der Position des Spielers - in Abhängigkeit von der Kameraposition verschiedene Inhalte aus den Datenbanken ausgelesen werden und der virtuelle Hintergrund erstellt wird.

Bei einigen Ausführungsformen kann die Steuereinrichtung ferner dazu ausgebildet sein, die Bildpunktelemente individuell und/oder in Gruppen benachbarter Bildpunktelemente zum Wiedergeben der Darstellung des virtuellen Hintergrunds darzustellen. Die Steuereinrichtung kann somit insbesondere dazu ausgebildet sein, die Bildpunktelemente unmittelbar zum Wiedergeben des transformierten virtuellen Hintergrunds anzusteuern.

Ferner kann die Steuereinrichtung beispielsweise als ein Mikroprozessor und/oder eine CPU (Central Processing Unit) ausgebildet sein. Darüber hinaus kann die Steuereinrichtung mehrere, miteinander kommunizierende Mikroprozessoren und/oder CPUs aufweisen, wobei beispielsweise mittels eines der Mikroprozessoren eine Transformation des in dem regelmäßigen Raster bereitgestellten virtuellen Hintergrunds auf die unregelmäßige Anordnung der Bildpunktelemente durchgeführt werden kann, während ein anderer Mikroprozessor zur Ansteuerung der Bildpunktelemente vorgesehen ist.

Die Hintergrund-Wiedergabeeinrichtung kann zudem bei einigen Ausführungsformen ein einziges, bezüglich beispielsweise eines Schauspielers relativ großes, durchgehendes Paneel umfassen, welches eben oder gewölbt ausgebildet sein kann.

Alternativ dazu kann die Hintergrund-Wiedergabeeinrichtung jedoch bei einigen Ausführungsformen auch eine Vielzahl von aneinandergrenzenden Paneelen umfassen. Jedes der mehreren Paneele und/oder das eine Paneel kann rechteckig und randlos ausgebildet sein. Ferner können die mehreren Paneele in einer zweidimensionalen Matrix angeordnet sein. Die Darstellung des virtuellen Hintergrunds kann bei solchen Ausführungsformen mittels der Vielzahl von Paneelen wiedergegeben werden, wobei jedes Paneel einen jeweiligen Abschnitt der Darstellung wiedergeben kann. Insbesondere können die Paneele zudem quadratisch ausgebildet sein.

Bei einigen Ausführungsformen können die (mehreren) Paneele hinsichtlich ihrer zweidimensionalen Anordnung von aktiv leuchtenden Bildpunktelementen identisch zueinander ausgebildet sein. Die aktiv leuchtenden Bildpunktelemente können insbesondere an jedem der Paneele unregelmäßig bzw. gegenüber einem regelmäßigen Raster statistisch verteilt angeordnet sein, wobei die Paneele jedoch identisch zueinander ausgebildet sein können. Insofern können die Paneele standardisiert hergestellt werden, so dass insbesondere Transformationen von einem regelmäßigen Raster auf die unregelmäßige zweidimensionale Anordnung der Bildpunktelemente standardisiert erfolgen können und nicht für jedes Paneel individuell bestimmt werden müssen. Insbesondere können die Paneele mit einer Steuereinrichtung ausgebildet sein, welche eine solche Transformation ermöglicht, so dass die Paneele problemlos mit herkömmlichen Einrichtungen, die beispielsweise einen virtuellen Hintergrund in einem regelmäßigen Raster bereitstellen können, verbunden werden können.

Die Erfindung bezieht sich auch auf eine Hintergrund-Wiedergabeeinrichtung für ein virtuelles Bildaufnahmestudio, welche dazu ausgebildet ist, hinter einem realen Motiv eine Darstellung eines virtuellen Hintergrunds für eine Kameraaufnahme wiederzugeben, wobei die Hintergrund-Wiedergabeeinrichtung wenigstens ein Paneel mit einer Vielzahl von aktiv leuchtenden Bildpunktelementen umfasst, die eine zweidimensionale Anordnung bilden, welche sich generell entlang einer ersten Erstreckungsrichtung und einer dazu senkrecht ausgerichteten zweiten Erstreckungsrichtung erstreckt, wobei die zweidimensionale Anordnung von aktiv leuchtenden Bildpunktelementen unregelmäßige Abweichungen entlang der ersten Erstreckungsrichtung und/oder entlang der zweiten Erstreckungsrichtung relativ zu einem orthogonalen Raster bildet. Bei einer derartigen Hintergrund-Wiedergabeeinrichtung können die vorstehend erläuterten Merkmale und Ausführungsformen vorgesehen sein.

Die Erfindung bezieht sich ferner auf ein Verfahren zum Wiedergeben einer Darstellung eines virtuellen Hintergrunds mittels einer Hintergrund-Wiedergabeeinrichtung nach einer der vorstehend erläuterten Ausführungsformen für eine Aufnahme mit einer Kamera in einem virtuellen Bildaufnahmestudio, wobei die Hintergrund-Wiedergabeeinrichtung wenigstens ein Paneel mit einer Vielzahl von aktiv leuchtenden Bildpunktelementen umfasst, die eine unregelmäßige zweidimensionale Anordnung bilden, wobei der virtuelle Hintergrund als eine Darstellung in einem regelmäßigen Raster bereitgestellt wird, und wobei der virtuelle Hintergrund für die Wiedergabe an der Hintergrund-Wiedergabeeinrichtung auf Koordinaten der Bildpunktelemente in der unregelmäßigen zweidimensionalen Anordnung transformiert wird. Bei einem derartigen Verfahren können die vorstehend erläuterten Merkmale und Ausführungsformen vorgesehen sein.

Die Erfindung wird im Folgenden rein beispielhaft anhand von Ausführungsbeispielen in Bezug auf die Zeichnungen erläutert.

Es zeigen:
- Fig. 1: eine schematische Darstellung eines Aufnahmesystems für ein Bildaufnahmestudio mit einer Hintergrund-Wiedergabeeinrichtung zur Wiedergabe einer Darstellung eines virtuellen Hintergrunds und mit einer Kamera,
- Fig. 2: eine schematische Darstellung eines Bildsensors der Kamera,
- Fig. 3A und 3B: eine jeweilige schematische Darstellung zur Veranschaulichung in einer Abbildung der Hintergrund-Wiedergabeeinrichtung entstehender Muster,
- Fig. 4: eine schematische Darstellung eines Paneels der Hintergrund-Wiedergabeeinrichtung, bei welchem eine Vielzahl von Bildpunktelementen gegenüber einem regelmäßigen Raster statistisch verteilt angeordnet ist,
- Fig. 5: eine Verteilung von Abständen der Bildpunktelemente zu jeweiligen Referenzlinien des regelmäßigen Rasters,
- Fig. 6: eine schematische Darstellung eines Paneels der Hintergrund-Wiedergabeeinrichtung, welches eine Vielzahl von Bildpunkteinheiten mit exzentrischen lichtemittierenden Flächenbereichen aufweist, deren Ausrichtung variiert,
- Fig. 7: eine schematische Darstellung zur Veranschaulichung einer Transformation eines in einem regelmäßigen Raster bereitgestellten virtuellen Hintergrunds auf eine unregelmäßige Anordnung von Bildpunktelementen der Hintergrund-Wiedergabeeinrichtung, und
- Fig. 8: eine schematische Darstellung einer Bildpunkteinheit, welche als exzentrischen lichtemittierenden Flächenbereich eine Leuchtdiodeneinheit mit mehreren Leuchtdioden aufweist.

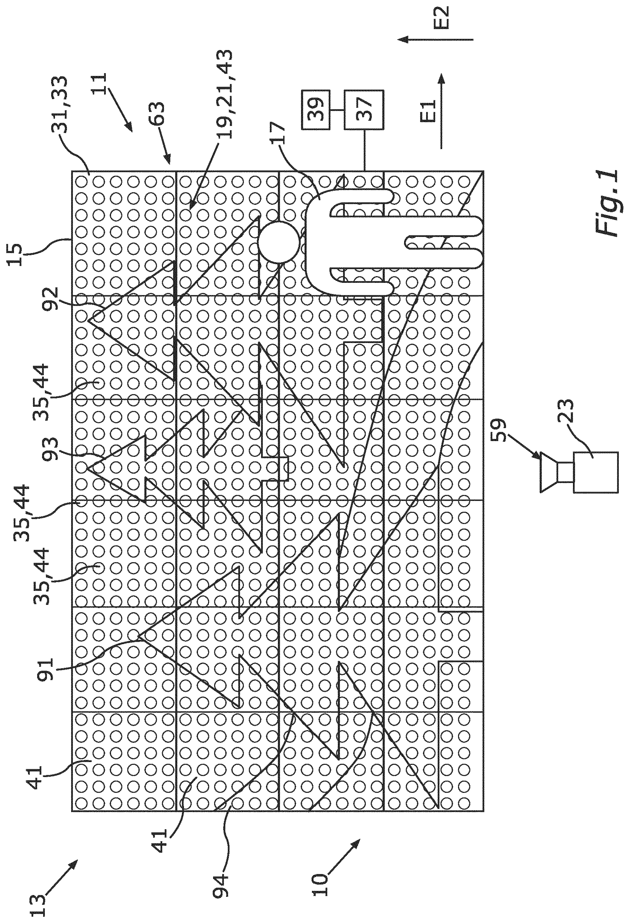

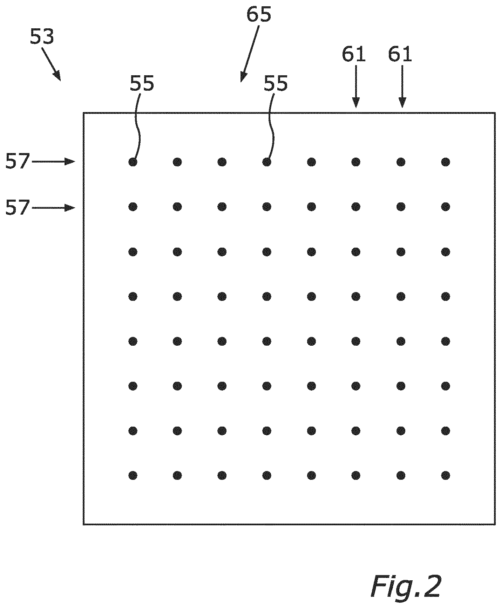

Fig. 1 zeigt schematisch ein virtuelles Bildaufnahmestudio 13, in welchen eine Szene, insbesondere in Form einer Bewegtbildaufnahme und/oder einer Fotoaufnahme, mittels einer zugeordneten Kamera 23 aufgenommen werden kann. Die Kamera 23 kann beispielsweise als Bewegtbildkamera ausgebildet sein, um Bewegtbildaufnahmen durchführen zu können, die als eine Folge von durch die Kamera 23 erzeugten Abbildungen gespeichert werden können. Dazu weist die Kamera 23 ein Objektiv 59 auf, welches insbesondere als Wechselobjektiv ausgebildet sein kann, das wahlweise mit einem Gehäuse der Kamera 23 verbunden werden kann. Dadurch kann stets ein jeweiliges optimal an die Umgebung in dem Bildaufnahmestudio 13 angepasstes Objektiv 59 genutzt werden, um bestmögliche Aufnahmen erstellen zu können. In dem Gehäuse der Kamera 23 kann insbesondere ein Bildsensor 53 mit mehreren lichtempfindlichen Sensorelementen 55 angeordnet sein, auf welche durch eine Blendenöffnung einer Blende eindringendes Licht mittels eines Linsensystems bzw. zumindest einer Linse zum Erzeugen einer Abbildung geleitet werden kann (vgl. Fig. 2).

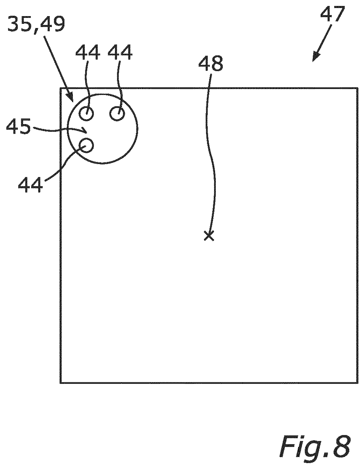

Ferner ist in dem Bildaufnahmestudio 13 ein Hintergrundwiedergabesystem 11 mit einer Hintergrund-Wiedergabeeinrichtung 15 angeordnet, welches gemeinsam mit der Kamera 23 ein Aufnahmesystem 10 bildet. Die Hintergrund-Wiedergabeeinrichtung 15 umfasst eine als LED-Wand 33 ausgebildete aktive Beleuchtungseinrichtung 31 und ist dazu ausgebildet, eine Darstellung 19 eines virtuellen Hintergrunds 21 für eine Aufnahme mittels der Kamera 23 wiederzugeben. Dazu weist die Beleuchtungseinrichtung 31 bzw. die LED-Wand 33 eine Vielzahl von aktiv leuchtenden Bildpunktelementen 35 auf, die in einer zweidimensionalen Anordnung nebeneinander angeordnet sind. Beispielsweise können die Bildpunktelemente 35 als individuell ansteuerbare Leuchtdioden 44 oder als individuell ansteuerbare Leuchtdiodeneinheiten 45 ausgebildet sein, wobei jede einer solchen Leuchtdiodeneinheit 45 mehrere, insbesondere drei, Leuchtdioden 44 umfassen kann (vgl. auch Fig. 8). Insbesondere kann es vorgesehen sein, dass die Bildpunktelemente 45 als Leuchtdiodeneinheiten 45 mit drei jeweiligen Leuchtdioden 44 ausgebildet sind, wobei eine der drei Leuchtdioden 44 rotes Licht, eine Leuchtdiode 44 grünes Licht und ein Leuchtdiode 44 blaues Licht emittieren kann. Die Leuchtdiodeneinheit 45 kann zudem einen Farbmischer umfassen, um durch jeweiliges individuelles Ansteuern der Leuchtdioden 44 einer Leuchtdiodeneinheit 45 eine jeweilige von dem Bildpunktelement 35 emittierte Farbe und/oder Helligkeit einstellen zu können. Die Leuchtdioden 44 können beispielsweise als LED oder als organische Leuchtdioden 44 bzw. OLED ausgebildet sein. Grundsätzlich können auch Hintergrund-Wiedergabeeinrichtungen zur Wiedergabe einer Darstellung eines virtuellen Hintergrunds in dem Bildaufnahmestudio 13 zum Einsatz kommen, welche die Darstellung mittels einer Rückprojektion erzeugen.

Ferner umfasst die Hintergrund-Wiedergabeeinrichtung 15 eine Vielzahl von Paneelen 41, welche auch als Panels bezeichnet werden können. An jedem Paneel 41 der Vielzahl von Paneelen 41 ist eine jeweilige Vielzahl der aktiv leuchtenden Bildpunktelemente 35 angeordnet, so dass an jedem der Paneele 41 ein Abschnitt der Darstellung 19 des virtuellen Hintergrunds 21 wiedergegeben werden kann. Die Paneele 41 sind insbesondere rechteckig und/oder quadratisch sowie randlos ausgebildet, so dass die Darstellung 19 des virtuellen Hintergrunds 21 auch an den Übergängen zwischen Paneelen 41 ohne sichtbare Unterbrechungen wiedergegeben werden kann. Die Paneele 41 sind ferner in einer zweidimensionalen Matrix angeordnet, um die Hintergrund-Wiedergabeeinrichtung 15 zu bilden.

Die Darstellung 19 des virtuellen Hintergrunds 21 spiegelt hier beispielhaft eine dreidimensionale Szene 43 mit Objekten 91, 92, 93 und 94, drei Bäumen und einem Weg, wider, die durch geeignetes Ansteuern der Bildpunktelement 35, insbesondere geeignetes Einstellen deren jeweiliger Farbe und Helligkeit, erzeugt werden kann. Die dreidimensionale Szene 43 ist dabei auf die im Wesentlichen zweidimensionale Anordnung der Bildpunktelemente 35 der Beleuchtungseinrichtung 31 projiziert, wobei insbesondere die Objekte 91, 92 und 93 in einem unterschiedlichen Abstand zu der Beleuchtungseinrichtung 31 bzw. der Hintergrund-Wiedergabeeinrichtung 11 erscheinen, um die Dreidimensionalität eines dem virtuellen Hintergrund 21 entsprechenden realen Hintergrunds nachzubilden.

Insbesondere dient die Darstellung 19 des virtuellen Hintergrunds 21 mittels der Hintergrund-Wiedergabeeinrichtung 15 dazu, einen Hintergrund für eine Aufnahme eines realen Motivs 17, beispielsweise eines Schauspielers, zu erzeugen, vor welchem eine Aufnahme erfolgen bzw. eine Filmszene gespielt werden kann. Dadurch können in dem Bildaufnahmestudio 13 grundsätzlich beliebige Landschaften, Räume oder Umgebungen geschaffen werden, vor bzw. in welchen eine Szene beispielsweise für einen Kinofilm gedreht werden soll. Zudem ist es möglich, durch eine sich zeitlich verändernde Ansteuerung der Bildpunktelemente 35 Bewegungen in dem virtuellem Hintergrund 21, zum Beispiel ein vorbeifahrendes Auto, darzustellen, auf welche der Schauspieler 17 im Vergleich zu einem Schauspiel vor einem Green-Screen vereinfacht und verbessert reagieren kann.

Die Hintergrund-Wiedergabeeinrichtung 15 erstreckt sich hier im Wesentlichen in der Vertikalen, so dass sich der Schauspieler 17 vor dem virtuellen Hintergrund 21 bewegen kann. Um den virtuellen Hintergrund 21 jedoch umfänglicher darstellen zu können, kann sich die Hintergrund-Wiedergabeeinrichtung 15 auch um den Schauspieler 17 herum oder oberhalb von diesem erstrecken, wobei die Hintergrund-Wiedergabeeinrichtung 15 über dem Schauspieler 17 insbesondere eine horizontale Ausrichtung aufweisen kann. Um den Schauspieler 17 umgeben oder einen Übergang von der gezeigten vertikalen Ausrichtung zu einer horizontalen Ausrichtung erzeugen zu können, kann die Hintergrund-Wiedergabeeinrichtung 15 bzw. die Beleuchtungseinrichtung 31 oder die LED-Wand 33 zumindest abschnittsweise auch gewölbt bzw. gekrümmt sein.

Zusätzlich zu dem Darstellen des virtuellen Hintergrunds 21 kann die Hintergrund-Wiedergabeeinrichtung 15 auch dazu dienen, das reale Motiv 17 zu beleuchten und dadurch beispielsweise eine weitere Studiobeleuchtung des Bildaufnahmestudios 13 unterstützen. Ferner kann durch ein Beleuchten des realen Motivs 17 mittels der Hintergrund-Wiedergabeeinrichtung 15 die Wechselwirkung des realen Motivs 17 bzw. des Schauspielers 17 mit in dem virtuellen Hintergrund 21 vorhandenen Lichtquellen, beispielsweise Laternen oder Lampen, verbessert werden, indem das reale Motiv 17 einen Schatten wirft, der mit den in einer von der Kamera 23 erzeugten Abbildung sichtbaren Lichtverhältnissen korrespondiert.

Um die Darstellung 19 des virtuellen Hintergrunds 21 erzeugen und die Bildpunktelemente 35 zur Wiedergabe der Darstellung ansteuern zu können, weist die Hintergrund-Wiedergabeeinrichtung 15 eine Steuereinrichtung 37 auf, welche mit einem Speicher 39 verbunden ist. In dem Speicher 39 kann insbesondere ein Modell des virtuellen Hintergrunds 21 gespeichert sein, so dass die Steuereinrichtung den virtuellen Hintergrund 21 anhand des Modells generieren kann. Ferner kann die Steuereinrichtung 37 dazu ausgebildet sein, den virtuellen Hintergrund 21 auf die Hintergrund-Wiedergabeeinrichtung 15 und insbesondere die zweidimensionale Anordnung der Bildpunktelemente 35 zu projizieren.

Bei der anhand der Fig. 1 veranschaulichten Hintergrund-Wiedergabeeinrichtung 15 bilden die Bildpunktelemente 35 jedes der Paneele 41 und sämtliche Bildpunktelemente 35 der Hintergrund-Wiedergabeeinrichtung 15 ein regelmäßiges, orthogonales Raster 63, wobei die Bildpunktelemente 35 geradlinig hintereinander entlang einer ersten Erstreckungsrichtung E1 und entlang einer zweiten Erstreckungsrichtung E2 angeordnet sind. Wie bereits erläutert, kann die Kamera 23 insbesondere einen Bildsensor 53 aufweisen, dessen lichtempfindliche Sensorelemente 55 in mehreren Zeilen 57 und in mehreren Spalten 61 angeordnet sind, so dass auch die lichtempfindlichen Sensorelemente 55 in einem regelmäßigen und orthogonalen Raster 65 angeordnet sind (vgl. Fig. 2).

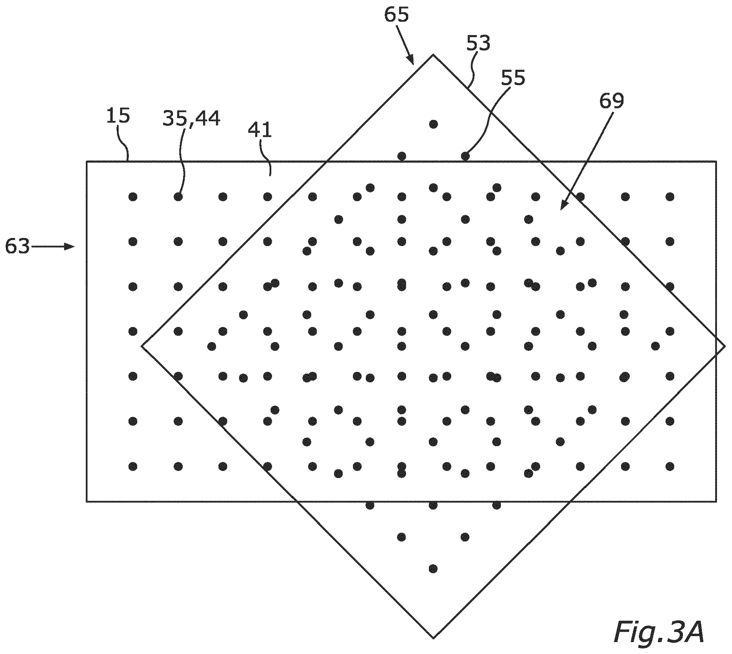

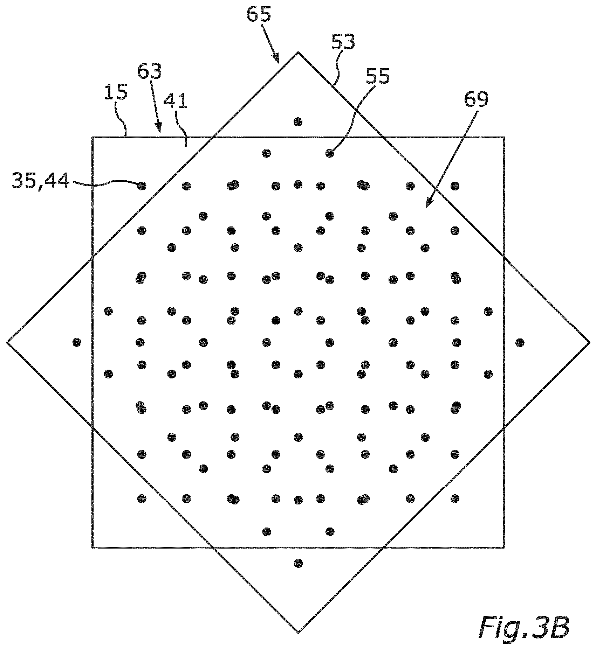

Da somit sowohl die Bildpunktelemente 35 der Hintergrund-Wiedergabeeinrichtung 15 in dem regelmäßigen Raster 63 als auch die lichtempfindlichen Sensorelemente 55 des Bildsensors 53 in dem regelmäßigen Raster 65 angeordnet sind, kann es bei einer Aufnahme der Hintergrund-Wiedergabeeinrichtung 15 mittels der Kamera 23 zu Interferenz- und Auslöschungseffekten kommen, durch welche in einer von der Kamera 23 erzeugten Abbildung 69 der Hintergrund-Wiedergabeeinrichtung 15 geometrische Muster entstehen können, die in der Darstellung 19 des virtuellen Hintergrunds 21 bzw. dem virtuellen Hintergrund 21 nicht enthalten sind. Dies ist anhand der Fig. 3A und 3B veranschaulicht, wobei eine Aufnahmesituation gezeigt ist, in welcher die Kamera 23 und somit der Bildsensor 53 gegenüber der Hintergrund-Wiedergabeeinrichtung 15 gedreht ist. Aufgrund der Überlagerung der Raster 63 und 65 können in der von der Kamera 23 erzeugten Abbildung 69 bzw. bei einer Wiedergabe dieser Abbildung 69 wiederkehrende geometrische Muster erscheinen, aufgrund derer die Abbildung 69 als Stillbildaufnahme und/oder Sequenz einer Bewegtbildaufnahme gänzlich unbrauchbar sein kann. Während die Ausstattung eines virtuellen Bildaufnahmestudios 13 mit einer solchen Hintergrund-Wiedergabeeinrichtung 15 somit das Schauspiel und die Aufnahme von Szenen erleichtern kann, indem die Darstellung 19 des virtuellen Hintergrunds 21 unmittelbar wahrgenommen und von der Kamera 23 abgebildet werden kann, können diese sich in der Abbildung 69 bildenden Muster der Verwendung einer derartigen Hintergrund-Wiedergabeeinrichtung 15 gegebenenfalls entgegenstehen.

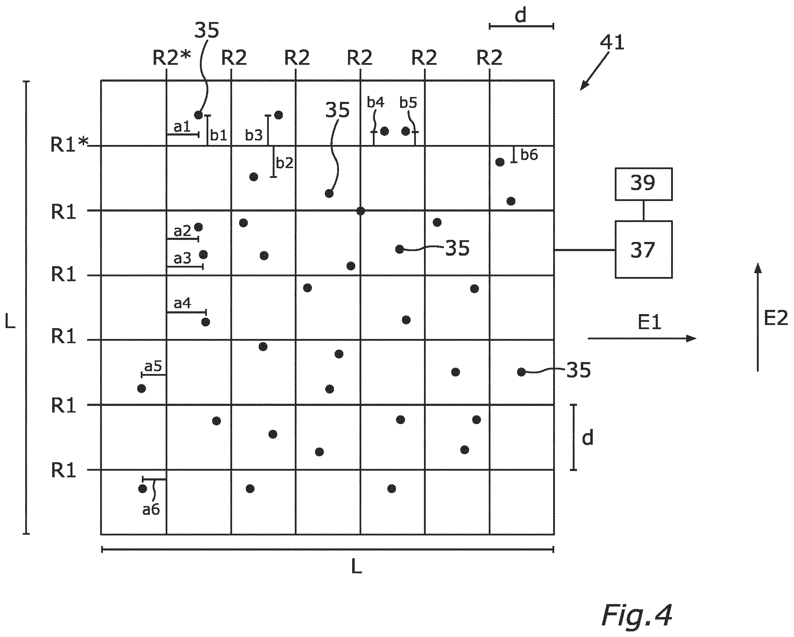

Um die Bildung solcher Muster in einer Abbildung 69 mittels der Kamera 23 bei einer Verwendung einer Hintergrund-Wiedergabeeinrichtung 15 jedoch verhindern zu können, kann die Hintergrund-Wiedergabeeinrichtung ein anhand von Fig. 4 schematisch veranschaulichtes Paneel 41 oder mehrere derartige Paneele umfassen. Auch dieses Paneel 41 weist eine Vielzahl von aktiv leuchtenden Bildpunktelementen 35 auf, welche eine sich entlang einer ersten Erstreckungsrichtung E1 und einer dazu senkrecht ausgerichteten zweiten Erstreckungsrichtung E2 erstreckende zweidimensionale Anordnung bilden. Anders als bei herkömmlichen Hintergrund-Wiedergabeeinrichtungen 15 bzw. herkömmlichen Paneelen 41 sind diese Bildpunktelemente 35 jedoch nicht in einem regelmäßigen und orthogonalen Raster 63 angeordnet, sondern die Bildpunktelemente 35 sind gegenüber einem solchen Raster 63 statistisch verteilt.

In Fig. 4 ist zur Veranschaulichung dieser Verteilung der Bildpunktelemente 35 ein regelmäßiges Raster gezeigt, welches mehrere entlang der ersten Erstreckungsrichtung E1 geradlinig verlaufende erste Referenzlinien R1 und mehrere entlang der zweiten Erstreckungsrichtung E2 geradlinig verlaufende zweite Referenzlinien R2 umfasst. Sowohl die ersten Referenzlinien R1 als auch die zweiten Referenzlinien R2 weisen einen regelmäßigen Abstand d zueinander auf. Der regelmäßige Abstand d der ersten Referenzlinien R1 zueinander entspricht einem Mittelwert von Abständen, welche entlang der zweiten Erstreckungsrichtung E2 zueinander benachbarte Bildpunktelemente 35 zueinander aufweisen, und der regelmäßige Abstand d der zweiten Referenzlinien R2 zueinander entspricht einem Mittelwert von Abständen, welche entlang der ersten Erstreckungsrichtung E1 zueinander benachbarte Bildpunktelemente 35 zueinander aufweisen. Ferner entspricht die Anzahl der ersten Referenzlinien R1 einer Anzahl von entlang der zweiten Erstreckungsrichtung E2 hintereinander angeordneten Bildpunktelementen 35. Eine Anzahl der zweiten Referenzlinien R2 entspricht zudem einer Anzahl von entlang der ersten Erstreckungsrichtung E1 hintereinander angeordneten Bildpunktelementen 35. Insofern bilden die ersten Referenzlinien R1 und die zweiten Referenzlinien R2 ein regelmäßiges Raster, wobei die Bildpunktelemente 35 bei einer herkömmlichen regelmäßigen Anordnung an den jeweiligen Schnittpunkten der ersten Referenzlinien R1 und der zweiten Referenzlinien R2 angeordnet werden könnten.

Bei dem anhand von Fig. 4 veranschaulichten Paneel 41 sind die Bildpunktelemente 35 hingegen nicht - jedenfalls nicht alle Bildpunktelemente 35 - an solchen Schnittpunkten der Referenzlinien R1 und R2 angeordnet, sondern statistisch gegenüber den Referenzlinien R1 und R2 verteilt. Insbesondere variiert daher ein entlang der zweiten Erstreckungsrichtung E2 gemessener jeweiliger Abstand b1, b2, b3, b4, b5 und b6 der Bildpunktelemente 35, welche zu der in Fig. 4 oben dargestellten ersten Referenzlinie R1* benachbart sind, zu der ersten Referenzlinie R1* entlang der ersten Erstreckungsrichtung E1 unregelmäßig. Die Bildpunktelemente 35, welche bei einer herkömmlichen Anordnung in einem regelmäßigen Raster von der ersten Referenzlinie R1* geschnitten würden, sind somit statistisch um diese erste Referenzlinie R1* verteilt. Zudem wird aus Fig. 4 ersichtlich, dass Abstände jeweiliger benachbarter Bildpunktelemente 35 zu jeder ersten Referenzlinien R1 unregelmäßig entlang der ersten Erstreckungsrichtung E1 variieren.

Indem der Abstand der Bildpunktelemente 35 zu der ersten Referenzlinie R1* entlang der ersten Erstreckungsrichtung E1 unregelmäßig variiert, bilden die Abstände b1, b2, b3, b4, b5 und b6 insbesondere kein Wiederholungsmuster. Beispielsweise kann es vorgesehen sein, dass die Abstände b1, b2, b3, b4, b5 und b6 der Bildpunktelemente 35 zu der ersten Referenzlinie R1* über die gesamte Ausdehnung des Paneels 41 unregelmäßig variieren und kein Wiederholungsmuster bilden, wobei es jedoch gegebenenfalls ausreichend sein kann, wenn die Abstände b1, b2, b3, b4, b5 und b6 der Bildpunktelemente 35 zu der ersten Referenzlinie R1* über eine Referenzstrecke L, welche beispielsweise 5 cm betragen und/oder zehn Bildpunktelemente 35 umfassen kann, unregelmäßig variieren und kein Wiederholungsmuster bilden.

Gleichermaßen geht aus Fig. 4 hervor, dass jeweilige Abstände a1, a2, a3, a4, a5 und a6 von zu einer in Fig. 4 am weitesten links gezeigten zweiten Referenzlinie R2* benachbarten Bildpunktelementen 35 zu der zweiten Referenzlinie R2* entlang der zweiten Erstreckungsrichtung E2 unregelmäßig variieren. Insbesondere variieren bei dem gezeigten Paneel 41 die Abstände zwischen sämtlichen ersten Referenzlinien R1 und jeweiligen benachbarten Bildpunktelementen 35, welche insofern einer jeweiligen Referenzlinie R1 zugewiesen werden können, sowie Abstände zwischen sämtlichen Referenzlinien R2 und jeweiligen benachbarten Bildpunktelementen 35, welche insofern einer jeweiligen zweiten Referenzlinie R2 zugewiesen werden können, statistisch. Insgesamt variiert somit die Anordnung der Bildpunktelemente 35 gegenüber einem regelmäßigen Raster statistisch in zwei Dimensionen.

Indem die Bildpunktelemente 35 statistisch gegenüber einer regelmäßigen Anordnung und insbesondere dem herkömmlichen regelmäßigen orthogonalen Raster 63 variieren, kann verhindert werden, dass bei einem Abbilden der Hintergrund-Wiedergabeeinrichtung 35 bzw. des Paneels 41 durch die Kamera 23 in der erzeugten Abbildung 69 geometrische Muster ähnlich den in Fig. 3A und 3B veranschaulichten Mustern aufgrund einer Überlagerung der Anordnung der Bildpunktelemente 35 mit dem regelmäßigen Raster 65 des Bildsensors 53 entstehen. Vielmehr kann durch das Vermeiden von wiederkehrenden Mustern, zumindest entlang einer ausreichend langen Referenzstrecke L, bei der Anordnung der Bildpunktelemente 35 vermieden werden, dass in der Abbildung 69 erkennbare Muster entstehen, so dass die von der Kamera 23 erstellten Abbildungen der Hintergrund-Wiedergabeeinrichtung 15 zuverlässig verwendet werden können.

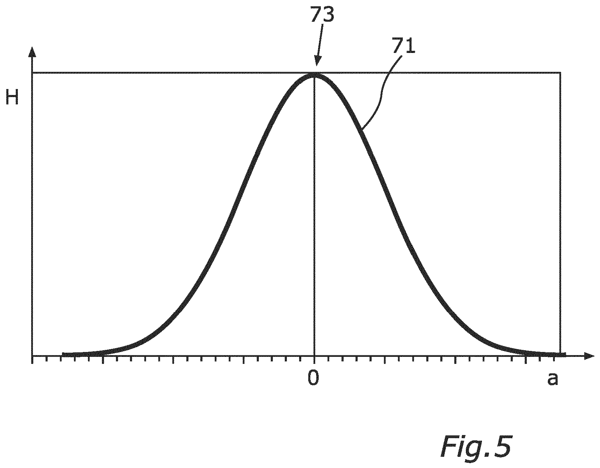

Wie in Fig. 5 veranschaulicht ist, kann eine Häufigkeit H der Abstände a der Bildpunktelemente 35 zu den ersten Referenzlinien R1 und/oder zu den zweiten Referenzlinien R2 insbesondere normalverteilt sein. Die Normalverteilung 71 kann zudem insbesondere mit einem Erwartungswert 73 von Null verträglich sein, wobei die in Fig. 5 veranschaulichte Normalverteilung 71 insbesondere einen Erwartungswert 73 von Null aufweist. Die Bildpunktelemente 35 können somit insbesondere derart statistisch um die ersten Referenzlinien R1 und die zweiten Referenzlinien R2 verteilt sein, dass die Anordnung der Bildpunktelemente 35 in einem großflächigen Mittel den Anschein einer regelmäßigen Anordnung erweckt. Durch eine derartige Verteilung kann insbesondere die Kompatibilität mit herkömmlichen Systemen, welche eine streng regelmäßige Anordnung von Bildpunktelementen 35 nutzen, vereinfacht werden, um bestehende Systeme beispielsweise mit derartigen Paneels 41 nachrüsten zu können. Zudem kann ein mittlerer Abstand zwischen den Bildpunktelementen 35 und den ersten Referenzlinien R1 und/oder den zweiten Referenzlinien R2 geringer als ein Drittel und/oder geringer als ein Zehntel des regelmäßigen Abstands d der ersten Referenzlinien R1 zueinander und der zweiten Referenzlinien R2 zueinander sein, so dass die Bildpunktelemente 35 lediglich geringfügig, jedoch zum Vermeiden von in der Abbildung 69 entstehenden Muster ausreichend, gegenüber einem regelmäßigen Raster verteilt sein können. Die erforderliche Verteilung kann beispielsweise durch Simulationen ermittelt werden.

Um jedoch die Kompatibilität des Paneels 41 mit bestehenden Systemen noch weiter zu erhöhen, weist das Paneel 41 eine Steuereinrichtung 37 auf, welche mit einem Speicher 39 verbunden ist. Wie bereits erläutert, kann in diesem Speicher 39 insbesondere ein Modell des virtuellen Hintergrunds 21 gespeichert sein, anhand dessen die Steuereinrichtung 37 den virtuellen Hintergrund 21 erzeugen und die Bildpunktelemente 35 entsprechend zum Wiedergeben der Darstellung 19 des virtuellen Hintergrunds 21 ansteuern kann. Zudem ist die Steuereinrichtung 37 des anhand von Fig. 4 veranschaulichten Paneels 41 dazu ausgebildet, einen in dem Speicher 39 in einem regelmäßigen Raster 67 bereitgestellten virtuellen Hintergrund 21 auf Koordinaten K1, K2 und K3 der Bildpunktelemente 35 und/oder die unregelmäßige zweidimensionale Anordnung der Bildpunktelemente 35 zu transformieren. Grundsätzlich kann die Steuereinrichtung 37 auch dazu ausgebildet sein, einen in dem Speicher 39 gespeicherten, beispielsweise dreidimensionalen, virtuellen Hintergrund 21 zunächst auf das regelmäßige Raster 67 zu projizieren, um den sodann in dem regelmäßigen Raster 67 bereitstehenden virtuellen Hintergrund 21 auf die Koordinaten K1, K2 und K3 der Bildpunktelemente 35 des Paneels 41 zu transformieren.

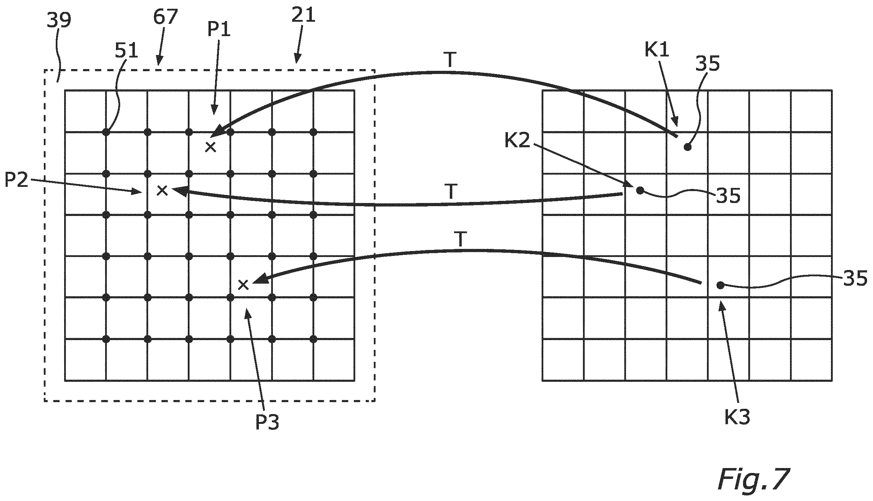

Um eine solche Transformation T vorzunehmen, können in dem Speicher 39 insbesondere auch die Koordinaten K1, K2 und K3 der Bildpunktelemente 35 gespeichert sein. Die Steuereinrichtung 37 kann dazu ausgebildet sein, wie Fig. 7 veranschaulicht, die Koordinaten K1, K2 und K3 in jeweilige Positionen P1, P2 und P3 in dem regelmäßigen Raster 67 des bereitgestellten virtuellen Hintergrunds zu überführen, um daraufhin einen jeweiligen den Positionen P1, P2 und P3 zugeordneten Farbwert und/oder Helligkeitswert zu ermitteln.

Beispielsweise kann die Steuereinrichtung 37 solche Farbwerte und/oder Helligkeitswerte durch eine Methode der nächsten Nachbarschaft ermitteln, indem die Steuereinrichtung 37 einen jeweiligen zu den Positionen P1, P2 und P3 am nächsten gelegenen Bildpunkt 51 des regelmäßigen Rasters 67 bestimmt und den Positionen P1, P2 und P3 den Farbwert und/oder Helligkeitswert des entsprechenden Bildpunkts 51 zuordnet. Dazu können in dem Speicher 39 insbesondere auch die Koordinaten der Bildpunkte 51 des virtuellen Hintergrunds 21 in dem regelmäßigen Raster 67 gespeichert sein. Die Steuereinrichtung 37 kann jedoch auch dazu ausgebildet sein, die Werte für die Position P1, P2 und P3 durch bilineare Interpolation zu ermitteln, indem vier jeweilige Bildpunkte 51 des regelmäßigen Rasters 67, welche die Positionen P1, P2 und P3 umgeben, herangezogen und deren Farbwerte und/oder Helligkeitswerte gemittelt werden, um den jeweiligen Positionen P1, P2 und P3 zugeordnete Werte zu bestimmen. Darüber hinaus kann die Steuereinrichtung 37 auch dazu ausgebildet sein, eine bikubische Interpolation durchzuführen, wobei für jede der Positionen P1, P2 und P3 4 x 4 benachbarte Bildpunkte 51 herangezogen werden.

Während die Steuereinrichtung 37 somit dazu ausgebildet sein kann, eine solche Transformation T durchzuführen und den Positionen P1, P2 und P3 zugeordnete Farbwerte und/oder Helligkeitswerte zu bestimmen, kann die Steuereinrichtung 37 auch dazu ausgebildet sein, die Bildpunktelemente 35 mit den Koordinaten K1, K2 und K3 zum Wiedergeben der den Positionen P1, P2 und P3 zugeordneten Farbwerte und/oder Helligkeitswerte anzusteuern. Hierdurch kann erreicht werden, dass trotz der unregelmäßigen Anordnung der Bildpunktelemente 35 keine Verzerrung der Darstellung 19 des virtuellen Hintergrunds 21 erfolgt und indem das Paneel 41 unmittelbar mit einer solchen Steuereinrichtung 37 ausgerüstet sein kann, kann eine Anbindung an bestehende Systeme, die den virtuellen Hintergrund 21 in dem regelmäßigen Raster 67 bereitstellen, problemlos erfolgen.

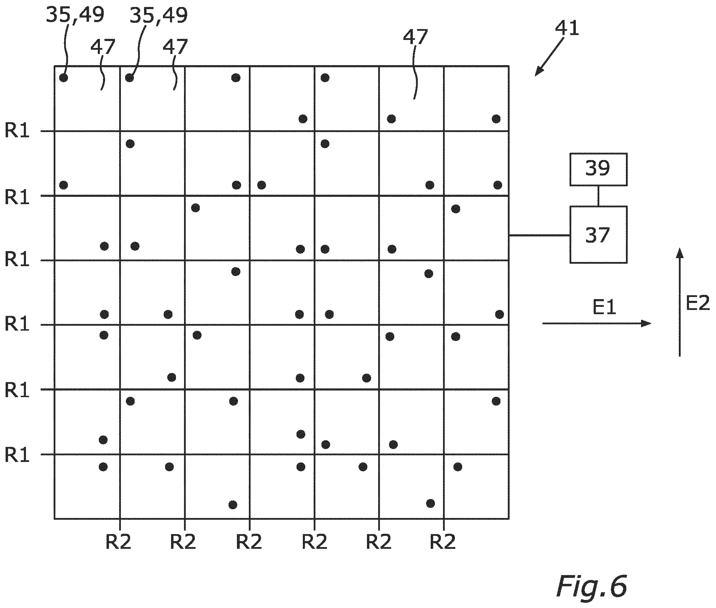

Fig. 6 zeigt schematisch eine weitere Ausführungsform eines Paneels 41, bei welchem eine Vielzahl von Bildpunktelementen 35 statistisch gegenüber einem regelmäßigen Raster verteilt ist. Das Paneel 41 weist eine Vielzahl von Bildpunkteinheiten 47 auf, welche hier beispielhaft quadratisch ausgebildet sind (vgl. auch Fig. 8). Grundsätzlich können auch sechseckige oder achteckige Ausbildungen solcher Bildpunkteinheiten 47 vorgesehen sein. Die Bildpunkteinheiten 47 bilden zudem eine regelmäßige Struktur bzw. ein regelmäßiges Raster.

Jede der Bildpunkteinheiten 47 weist einen exzentrischen lichtemittierenden Flächenbereich 49 auf, welcher das Bildpunktelement 35 bildet und gegenüber einem geometrischen Zentrum 48 der Bildpunkteinheit 47 exzentrisch angeordnet ist (vgl. Fig. 8). Die statistische Verteilung der Bildpunktelemente 35 gegenüber dem von den Bildpunkteinheiten 47 gebildeten regelmäßigen Raster kann erreicht werden, indem die Ausrichtung der Bildpunkteinheiten 47 entlang der ersten Erstreckungsrichtung E1 und der zweiten Erstreckungsrichtung E2 variiert, so dass die exzentrischen lichtemittierenden Flächenbereiche 49 mit unregelmäßig variierendem Abstand von Verbindungslinien zwischen den Bildpunkteinheiten 47 bzw. Referenzlinien R1 und R2 angeordnet werden können. Die Bildpunkteinheiten 47 können dazu insbesondere gegeneinander verdreht angeordnet sein. Ferner können die Bildpunkteinheiten 47 mechanisch miteinander und/oder mit einem Träger gekoppelt sein, um das Paneel 41 zu bilden, und es kann eine signaltechnische Verbindung zwischen den Bildpunkteinheiten 47 bestehen, um die Darstellung 19 des virtuellen Hintergrunds 21 wiedergeben zu können.

### Bezugszeichenliste

- 10: Aufnahmesystem
- 11: Hintergrundwiedergabesystem
- 13: Bildaufnahmestudio
- 15: Hintergrund-Wiedergabeeinrichtung
- 17: reales Motiv, Schauspieler
- 19: Darstellung
- 21: virtueller Hintergrund
- 23: Kamera
- 31: Beleuchtungseinrichtung
- 33: LED-Wand
- 35: Bildpunktelement
- 37: Steuereinrichtung
- 39: Speicher
- 41: Paneel
- 43: dreidimensionale Szene
- 44: Leuchtdiode
- 45: Leuchtdiodeneinheit
- 47: Bildpunkteinheit
- 48: geometrisches Zentrum
- 49: exzentrischer lichtemittierender Flächenbereich
- 51: Bildpunkt
- 53: Bildsensor
- 55: lichtempfindliches Sensorelement
- 57: Zeile
- 59: Kameraobjektiv, Wechselobjektiv
- 61: Spalte
- 63: regelmäßiges Raster
- 65: regelmäßiges Raster
- 67: regelmäßiges Raster
- 69: Abbildung
- 71: Normalverteilung
- 73: Erwartungswert
- 91: erstes Objekt
- 92: zweites Objekt
- 93: drittes Objekt
- 94: viertes Objekt
- E1: erste Erstreckungsrichtung
- E2: zweite Erstreckungsrichtung
- H: Häufigkeit
- K1, K2, K3: Koordinate
- L: Referenzstrecke
- P1, P2, P3: Position
- R1, R1*: erste Referenzlinie
- R2, R2*: zweite Referenzlinie
- T: Transformation
- a: Abstand
- a1 - a6: Abstand
- b1 - b6: Abstand
- d: regelmäßiger Abstand

## Patentansprüche

1. Hintergrund-Wiedergabeeinrichtung (15) für ein virtuelles Bildaufnahmestudio (13), welche dazu ausgebildet ist, hinter einem realen Motiv (17) eine Darstellung (19) eines virtuellen Hintergrunds (21) für eine Kameraaufnahme wiederzugeben,
wobei die Hintergrund-Wiedergabeeinrichtung (15) wenigstens ein Paneel (41) mit einer Vielzahl von aktiv leuchtenden Bildpunktelementen (35) umfasst, die eine zweidimensionale Anordnung bilden, welche sich entlang einer ersten Erstreckungsrichtung (E1) und einer dazu senkrecht ausgerichteten zweiten Erstreckungsrichtung (E2) erstreckt, wobei ein entlang der zweiten Erstreckungsrichtung (E2) gemessener jeweiliger Abstand (b1, b2, b3, b4, b5, b6) der Bildpunktelemente (35) zu einer ersten Referenzlinie (R1), die entlang der ersten Erstreckungsrichtung (E1) geradlinig verläuft, entlang der ersten Erstreckungsrichtung (E1) unregelmäßig variiert,
**dadurch gekennzeichnet, dass**
das Paneel (41) eine der Vielzahl von Bildpunktelementen (35) entsprechende Anzahl von separaten Bildpunkteinheiten (47) aufweist, die eine regelmäßige Anordnung bilden, wobei jede Bildpunkteinheit (47) einen exzentrischen lichtemittierenden Flächenbereich (49) aufweist, der einem jeweiligen Bildpunktelement (35) entspricht und der jedoch bezüglich eines geometrischen Zentrums (48) der Bildpunkteinheit (47) exzentrisch angeordnet ist, wobei entlang der regelmäßigen Anordnung von Bildpunkteinheiten (47) die Ausrichtung des jeweiligen exzentrischen lichtemittierenden Flächenbereichs (49) variiert.

2. Hintergrund-Wiedergabeeinrichtung (15) nach Anspruch 1,
wobei die Hintergrund-Wiedergabeeinrichtung (15) als eine LED-Wand (33) und die Bildpunktelemente (35) als Leuchtdioden (44) oder Leuchtdiodeneinheiten ausgebildet sind; und/oder
wobei sich die Hintergrund-Wiedergabeeinrichtung (15) in einer vertikalen und/oder horizontalen Ausrichtung erstreckt; und/oder
wobei die erste Erstreckungsrichtung (E1) entlang der Horizontalen und die zweite Erstreckungsrichtung (E2) entlang der Vertikalen oder geneigt zu der Vertikalen ausgerichtet ist; und/oder
wobei die Hintergrund-Wiedergabeeinrichtung (15) dazu ausgebildet ist, die Darstellung (19) des virtuellen Hintergrunds (21) während der Kameraaufnahme zeitlich zu variieren; und/oder
wobei die Hintergrund-Wiedergabeeinrichtung (15) eine Vielzahl von aneinander grenzenden Paneelen (41) umfasst, wobei jedes Paneel (41) rechteckig ist und randlos ausgebildet ist, wobei die Paneele (41) in einer zweidimensionalen Matrix angeordnet sind, wobei die Paneele (41) insbesondere hinsichtlich ihrer zweidimensionalen Anordnung von aktiv leuchtenden Bildpunktelementen (35) identisch zueinander ausgebildet sind.

3. Hintergrund-Wiedergabeeinrichtung (15) nach Anspruch 1 oder 2,
wobei der jeweilige Abstand (b1, b2, b3, b4, b5, b6) der Bildpunktelemente (35) zu der ersten Referenzlinie (R1) entlang einer Referenzstrecke (L), die wenigstens 5 cm beträgt und/oder wenigstens 20 Bildpunktelemente (35) umfasst, entlang der ersten Erstreckungsrichtung (E1) unregelmäßig variiert; oder
wobei der jeweilige Abstand (b1, b2, b3, b4, b5, b6) der Bildpunktelemente (35) zu der ersten Referenzlinie (R1) über die gesamte Ausdehnung des Paneels (41) entlang der ersten Erstreckungsrichtung unregelmäßig variiert.

4. Hintergrund-Wiedergabeeinrichtung (15) nach einem der vorhergehenden Ansprüche, wobei die Abstände (b1, b2, b3, b4, b5, b6) der Bildpunktelemente (35) zu der ersten Referenzlinie (R1) entlang der ersten Erstreckungsrichtung (E1) kein Wiederholungsmuster bilden; und/oder
wobei die Abstände (b1, b2, b3, b4, b5, b6) der Bildpunktelemente (35) zu der ersten Referenzlinie (R1) normalverteilt sind.

5. Hintergrund-Wiedergabeeinrichtung (15) nach einem der vorhergehenden Ansprüche, wobei ein entlang der ersten Erstreckungsrichtung (E1) gemessener jeweiliger Abstand (a1, a2, a3, a4, a5, a6) der Bildpunktelemente (35) zu einer zweiten Referenzlinie (R2), die entlang der zweiten Erstreckungsrichtung (E2) geradlinig verläuft, entlang der zweiten Erstreckungsrichtung (E2) unregelmäßig variiert,
wobei die Abstände (a1, a2, a3, a4, a5, a6) der Bildpunktelemente (35) zu der zweiten Referenzlinie (R2) insbesondere normalverteilt sind.

6. Hintergrund-Wiedergabeeinrichtung (15) nach einem der vorhergehenden Ansprüche, wobei die zweidimensionale Anordnung durch mehrere sich entlang der ersten Erstreckungsrichtung (E1) erstreckende und in regelmäßigem Abstand (d) zueinander angeordneten erste Referenzlinien (R1) unterteilbar ist,
wobei der regelmäßige Abstand (d) einem Mittelwert von Abständen entspricht, welche entlang der zweiten Erstreckungsrichtung (E2) benachbarte Bildpunktelemente (35) zueinander aufweisen,
wobei jedes der Vielzahl von Bildpunktelementen (35) einer jeweiligen ersten Referenzlinie (R1) zuweisbar ist, zu welcher das Bildpunktelement (35) bezogen auf die zweite Erstreckungsrichtung (E2) benachbart ist,
wobei ein Abstand (b1, b2, b3, b4, b5, b6) zwischen jeder der mehreren ersten Referenzlinien (R1) und den jeweiligen zugewiesenen Bildpunktelementen (35) entlang der ersten Erstreckungsrichtung (E1) unregelmäßig variiert,
wobei eine Anzahl der mehreren ersten Referenzlinien (R1) insbesondere einer Anzahl von Bildpunktelementen (35) entspricht, welche in der zweidimensionalen Anordnung entlang der zweiten Erstreckungsrichtung (E2) hintereinander angeordnet sind.

7. Hintergrund-Wiedergabeeinrichtung (15) nach Anspruch 6,
wobei ein mittlerer Abstand zwischen den Bildpunktelementen (35) und der jeweiligen zugewiesenen ersten Referenzlinie (R1) der mehreren ersten Referenzlinien (R1) kleiner als ein Drittel des regelmäßigen Abstands (d) oder kleiner als ein Zehntel des regelmäßigen Abstands (d) ist.

8. Hintergrund-Wiedergabeeinrichtung (15) nach Anspruch 6 oder 7,
wobei eine Verteilung der variierenden Abstände (b1, b2, b3, b4, b5, b6) zwischen den mehreren ersten Referenzlinien (R1) und den jeweiligen zugewiesenen Bildpunktelementen (35) einer Normalverteilung (71) entspricht,
wobei die Normalverteilung (71) insbesondere mit einem Erwartungswert (73) von Null verträglich ist und/oder insbesondere einen Erwartungswert (73) von Null aufweist.

9. Hintergrund-Wiedergabeeinrichtung (15) nach einem der vorhergehenden Ansprüche, wobei die zweidimensionale Anordnung durch mehrere sich entlang der zweiten Erstreckungsrichtung (E2) erstreckende und in regelmäßigem Abstand (d) zueinander angeordneten zweite Referenzlinien (R2) unterteilbar ist,
wobei der regelmäßige Abstand (d) der zweiten Referenzlinien (R2) einem Mittelwert von Abständen entspricht, welche entlang der ersten Erstreckungsrichtung (E1) benachbarte Bildpunktelemente (35) zueinander aufweisen,
wobei jedes der Vielzahl von Bildpunktelementen (35) einer jeweiligen zweiten Referenzlinie (R2) zuweisbar ist, zu welcher das Bildpunktelement (35) bezogen auf die erste Erstreckungsrichtung (E1) benachbart ist,
wobei ein Abstand (a1, a2, a3, a4, a5, a6) zwischen jeder der mehreren zweiten Referenzlinien (R2) und den jeweiligen zugewiesenen Bildpunktelementen (35) entlang der zweiten Erstreckungsrichtung (E2) unregelmäßig variiert,
wobei eine Anzahl der mehreren zweiten Referenzlinien (R2) insbesondere einer Anzahl von Bildpunktelementen (35) entspricht, welche in der zweidimensionalen Anordnung entlang der zweiten Erstreckungsrichtung (E2) hintereinander angeordnet sind, und/oder wobei ein mittlerer Abstand zwischen den Bildpunktelementen (35) und der jeweiligen zugewiesenen zweiten Referenzlinie (R2) der mehreren zweiten Referenzlinien (R2) insbesondere kleiner als ein Drittel des regelmäßigen Abstands (d) der zweiten Referenzlinien (R2) zueinander oder kleiner als ein Zehntel des regelmäßigen Abstands (d) ist, und/oder
wobei eine Verteilung der Bildpunktelemente (35) gegenüber den mehreren zweiten Referenzlinien (R2) im großflächigen Mittel insbesondere als eine regelmäßige Struktur erscheint; und/oder
wobei eine Verteilung der variierenden Abstände (a1, a2, a3, a4, a5, a6) zwischen den mehreren zweiten Referenzlinien (R2) und den jeweiligen zugewiesenen Bildpunktelementen (35) insbesondere einer zweiten Normalverteilung (71) entspricht,
wobei die zweite Normalverteilung (71) insbesondere mit einem Erwartungswert (73) von Null verträglich ist und/oder insbesondere Erwartungswert (73) von Null aufweist.

10. Hintergrund-Wiedergabeeinrichtung (15) nach einem der vorhergehenden Ansprüche, wobei die Hintergrund-Wiedergabeeinrichtung (15) eine Steuereinrichtung (37) aufweist, wobei die Steuereinrichtung (37) mit einem Speicher (39) verbunden ist, in welchem der virtuelle Hintergrund (21) als eine Darstellung in einem regelmäßigen Raster (67) bereitgestellt ist, wobei die Steuereinrichtung (37) dazu ausgebildet ist, den bereitgestellten virtuellen Hintergrund (21) auf Koordinaten (K1, K2. K3) der Bildpunktelemente (35) in der zweidimensionalen Anordnung zu transformieren,
wobei die Koordinaten (K1, K2. K3) der Vielzahl von Bildpunktelementen (35) insbesondere in dem Speicher (39) gespeichert und/oder insbesondere in den Speicher (39) einschreibbar sind, und/oder
wobei der virtuelle Hintergrund (21) insbesondere als Modell in dem Speicher (39) bereitgestellt ist; und/oder
wobei die Steuereinrichtung (37) insbesondere dazu ausgebildet ist, die Bildpunktelemente (35) des Paneels (41) individuell und/oder in Gruppen benachbarter Bildpunktelemente (35) zum Wiedergeben der Darstellung (19) des virtuellen Hintergrunds (21) anzusteuern.

11. Hintergrund-Wiedergabeeinrichtung (15) nach Anspruch 10,
wobei die Steuereinrichtung (37) dazu ausgebildet ist, mittels der Transformation (T) anhand des in dem regelmäßigen Raster (67) bereitgestellten virtuellen Hintergrunds (21) einen jeweiligen Farbwert und/oder einen jeweiligen Helligkeitswert für die Bildpunktelemente (35) zu ermitteln.

12. Hintergrund-Wiedergabeeinrichtung (15) nach Anspruch 10 oder 11,
wobei die Steuereinrichtung (37) dazu ausgebildet ist, den bereitgestellten virtuellen Hintergrund (21) durch eine Methode der nächsten Nachbarschaft, eine bilineare Interpolation und/oder eine bikubische Interpolation auf die Koordinaten (K1, K2, K3) der Bildpunktelemente (35) zu transformieren.

13. Verfahren zum Wiedergeben einer Darstellung (19) eines virtuellen Hintergrunds (21) mittels einer Hintergrund-Wiedergabeeinrichtung (15) nach einem der vorhergehenden Ansprüche für eine Aufnahme mit einer Kamera (23) in einem virtuellen Bildaufnahmestudio (13),
wobei die Hintergrund-Wiedergabeeinrichtung (15) wenigstens ein Paneel (41) mit einer Vielzahl von aktiv leuchtenden Bildpunktelementen (35) umfasst, die eine unregelmäßige zweidimensionale Anordnung bilden,
wobei der virtuelle Hintergrund (21) als eine Darstellung in einem regelmäßigen Raster (67) bereitgestellt wird und für die Wiedergabe an der Hintergrund-Wiedergabeeinrichtung (15) auf Koordinaten (K1, K2. K3) der Bildpunktelemente (35) in der unregelmäßigen zweidimensionalen Anordnung transformiert wird.

## Claims

1. A background display device (15) for a virtual image recording studio (13) that is configured to display, behind a real subject (17), a representation (19) of a virtual background (21) for a camera recording,
wherein the background display device (15) comprises at least one panel (41) having a plurality of actively illuminating picture elements (35) that form a two-dimensional arrangement which extends along a first direction of extent (E1) and a second direction of extent (E2) oriented perpendicular thereto,
wherein a respective spacing (b1, b2, b3, b4, b5, b6), measured along the second direction of extent (E2), of the picture elements (35) from a first reference line (R1), which extends rectilinearly along the first direction of extent (E1), varies irregularly along the first direction of extent (E1), **characterized in that**
the panel (41) has a number of separate picture element units (47) that corresponds to the plurality of picture elements (35), said separate picture element units (47) forming a regular arrangement, wherein each picture element unit (47) has an eccentric light-emitting areal region (49) which corresponds to a respective picture element (35), but which is eccentrically arranged with respect to a geometric center (48) of the picture element unit (47), wherein the orientation of the respective eccentric light-emitting areal region (49) varies along the regular arrangement of picture element units (47).

2. A background display device (15) according to claim 1,
wherein the background display device (15) is configured as an LED wall (33) and the picture elements (35) are configured as light-emitting diodes; and/or
wherein the background display device (15) extends in a vertical and/or horizontal orientation; and/or
wherein the first direction of extent (E1) is oriented along the horizontal and the second direction of extent (E2) is oriented along the vertical or inclined to the vertical; and/or
wherein the background playback device (15) is configured to vary the representation (19) of the virtual background (21) in time during the camera recording; and/or
wherein the background display device (15) comprises a plurality of mutually adjoining panels (41), wherein each panel (41) is formed as rectangular and without edges, and wherein the panels are arranged in a two-dimensional matrix,
wherein the panels (41) are in particular formed identically to one another with respect to their two-dimensional arrangement of actively illuminating picture elements (35).

3. A background display device (15) according to claim 1 or 2,
wherein the respective spacing (b1, b2, b3, b4, b5, b6) of the picture elements (35) from the first reference line (R1) varies irregularly along a reference path (L), which amounts to at least 5 cm and/or comprises at least 20 picture elements (35), along the first direction of extent (E1); or wherein the respective spacing (b1, b2, b3, b4, b5, b6) of the picture elements (35) from the first reference line (R1) varies irregularly over the total extent of the panel (41) along the first direction of extent (E1).

4. A background display device (15) according to any one of the preceding claims,
wherein the spacings (b1, b2, b3, b4, b5, b6) of the picture elements (35) from the first reference line (R1) do not form a repeating pattern along the first direction of extent (E1); and/or
wherein the spacings (b1, b2, b3, b4, b5, b6) of the picture elements (35) from the first reference line (R1) are normally distributed.

5. A background display device (15) according to any one of the preceding claims,
wherein a respective spacing (a1, a2, a3, a4, a5, a6), measured along the first direction of extent (E1), of the picture elements (35) from a second reference line (R2), which extends rectilinearly along the second direction of extent (E2), varies irregularly along the second direction of extent (E2), wherein the spacings (a1, a2, a3, a4, a5, a6) of the picture elements (35) from the second reference line (R2) are in particular normally distributed.

6. A background display device (15) according to any one of the preceding claims,
wherein the two-dimensional arrangement can be divided by a plurality of first reference lines (R1) extending along the first direction of extent (E1) and arranged at a regular spacing (d) from one another,
wherein the regular spacing (d) corresponds to a mean value of spacings which picture elements (35) adjacent along the second direction of extent (E2) have from one another,
wherein each of the plurality of picture elements (35) can be assigned to a respective first reference line (R1) to which the picture element (35) is adjacent with respect to the second direction of extent (E2),
wherein a spacing (b1, b2, b3, b4, b5, b6) between each of the plurality of first reference lines (R1) and the respective assigned picture elements (35) varies irregularly along the first direction of extent (E1),
wherein a number of the plurality of first reference lines (R1) in particular corresponds to a number of picture elements (35) which are arranged behind one another along the second direction of extent (E2) in the two-dimensional arrangement.

7. A background display device (15) according to claim 6,
wherein a mean spacing between the picture elements (35) and the respective assigned first reference line (R1) of the plurality of first reference lines (R1) is less than one third of the regular spacing (d) or less than one tenth of the regular spacing (d).

8. A background display device (15) according to claim 6 or 7,
wherein a distribution of the varying spacings (b1, b2, b3, b4, b5, b6) between the plurality of first reference lines (R1) and the respective assigned picture elements (35) corresponds to a normal distribution (71), wherein the normal distribution (71) is in particular compatible with an expected value (73) of zero and/or in particular has an expected value (73) of zero.

9. A background display device (15) according to any one of the preceding claims,
wherein the two-dimensional arrangement can be divided by a plurality of second reference lines (R2) extending along the second direction of extent (E2) and arranged at a regular spacing (d) from one another,
wherein the regular spacing (d) of the second reference lines (R2) corresponds to a mean value of spacings which picture elements (35) adjacent along the first direction of extent (E1) have from one another, wherein each of the plurality of picture elements (35) can be assigned to a respective second reference line (R2) to which the picture element (35) is adjacent with respect to the first direction of extent (E1),
wherein a spacing (a1, a2, a3, a4, a5, a6) between each of the plurality of second reference lines (R2) and the respective assigned picture elements (35) varies irregularly along the second direction of extent (E2), wherein a number of the plurality of second reference lines (R2) in particular corresponds to a number of picture elements (35) which are arranged behind one another along the second direction of extent (E2) in the two-dimensional arrangement, and/or
wherein a mean spacing between the picture elements (35) and the respective assigned second reference line (R2) of the plurality of second reference lines (R2) is in particular less than one third of the regular spacing (d) of the second reference lines (R2) from one another or less than one tenth of the regular spacing (d), and/or
wherein a distribution of the picture elements (35) in particular appears as a regular structure with respect to the plurality of second reference lines (R2) on a large-area average, and/or
wherein a distribution of the varying spacings (a1, a2, a3, a4, a5, a6) between the plurality of second reference lines (R2) and the respective assigned picture elements (35) in particular corresponds to a second normal distribution (71),
wherein the second normal distribution (71) is in particular compatible with an expected value (73) of zero and/or in particular has an expected value (73) of zero.

10. A background display device (15) according to any one of the preceding claims,
wherein the background display device (15) has a control device (37), wherein the control device (37) is connected to a memory (39) in which the virtual background (21) is stored as a representation in a regular grid (67), wherein the control device (37) is configured to transform the provided virtual background (21) into coordinates (K1, K2, K3) of the picture elements (35) in the two-dimensional arrangement,
wherein the coordinates (K1, K2, K3) of the plurality of picture elements (35) are in particular stored in the memory (39) and/or can in particular be written into the memory (39), and/or
wherein the virtual background (21) is in particular provided as a model in the memory (39), and/or
wherein the control device (37) is in particular configured to control the picture elements (35) of the panel (41) individually and/or in groups of adjacent picture elements (35) to display the representation (19) of the virtual background (21).

11. A background display device (15) according to claim 10,
wherein the control device (37) is configured to determine a respective color value and/or a respective brightness value for the picture elements (35) via the transformation (T) based on the virtual background (21) provided in the regular grid (67).

12. A background display device (15) according to claim 10 or 11,
wherein the control device (37) is configured to transform the provided virtual background (21) into the coordinates (K1, K2, K3) of the picture elements (35) by a next neighbor method, a bilinear interpolation and/or a bicubic interpolation.

13. A method of displaying a representation (19) of a virtual background (21) by a background display device (15) according to any one of the preceding claims for a recording by a camera (23) in a virtual image recording studio (13),
wherein the background display device (15) comprises at least one panel (41) having a plurality of actively illuminating picture elements (35) which form an irregular two-dimensional arrangement,
wherein the virtual background (21) is provided as a representation in a regular grid (67) and is transformed into coordinates (K1, K2, K3) of the picture elements (35) in the irregular two-dimensional arrangement for the display on the background display device (15).

## Revendications

1. Dispositif de reproduction d'arrière-plan (15) pour un studio de prise de vue virtuel (13), qui est conçu pour reproduire une représentation (19) d'un arrière-plan virtuel (21) derrière un sujet réel (17) pour une prise de vue par une caméra,
dans lequel
le dispositif de reproduction d'arrière-plan (15) comprend au moins un panneau (41) avec une pluralité d'éléments de pixel (35) à éclairage actif, qui forment un agencement bidimensionnel qui s'étend le long d'une première direction d'extension (E1) et d'une deuxième direction d'extension (E2) orientée perpendiculairement à la première,
une distance respective (b1, b2, b3, b4, b5, b6) des éléments de pixel (35), mesurée le long de la deuxième direction d'extension (E2), par rapport à une première ligne de référence (R1) qui s'étend en ligne droite le long de la première direction d'extension (E1), varie de manière irrégulière le long de la première direction d'extension (E1),
**caractérisé en ce que**
le panneau (41) comprend un nombre d'unités de pixel séparées (47) qui correspond à la pluralité d'éléments de pixel (35), lesquelles forment un agencement régulier, chaque unité de pixel (47) présentant une zone surfacique d'émission de lumière (49) excentrée qui correspond à un élément de pixel respectif (35), mais qui est excentrée par rapport à un centre géométrique (48) de l'unité de pixel (47), l'orientation de la zone surfacique d'émission de lumière (49) excentrée respective variant le long de l'agencement régulier d'unités de pixel (47).

2. Dispositif de reproduction d'arrière-plan (15) selon la revendication 1, dans lequel le dispositif de reproduction d'arrière-plan (15) est conçu comme un écran de DELs (33), et les éléments de pixel (35) sont conçus comme des diodes électroluminescentes (44) ou des unités de diodes électroluminescentes ; et/ou
le dispositif de reproduction d'arrière-plan (15) s'étend dans une direction verticale et/ou horizontale ; et/ou
la première direction d'extension (E1) est orientée le long de l'horizontale et la deuxième direction d'extension (E2) est orientée le long de la verticale ou est inclinée par rapport à la verticale ; et/ou
le dispositif de reproduction d'arrière-plan (15) est conçu pour faire varier dans le temps la représentation (19) de l'arrière-plan virtuel (21) pendant la prise de vue par la caméra ; et/ou
le dispositif de reproduction d'arrière-plan (15) comprend une pluralité de panneaux (41) adjacents les uns aux autres, chaque panneau (41) étant rectangulaire et dépourvu de bordure, les panneaux (41) étant agencés selon une matrice bidimensionnelle, les panneaux (41) étant réalisés de manière identique les uns aux autres, en particulier en ce qui concerne leur agencement bidimensionnel d'éléments de pixel (35) à éclairage actif.

3. Dispositif de reproduction d'arrière-plan (15) selon la revendication 1 ou 2, dans lequel la distance respective (b1, b2, b3, b4, b5, b6) des éléments de pixel (35) par rapport à la première ligne de référence (R1) varie de manière irrégulière le long d'un trajet de référence (L) qui est d'au moins 5 cm et/ou comprend au moins 20 éléments de pixel (35), le long de la première direction d'extension (E1) ; ou
la distance respective (b1, b2, b3, b4, b5, b6) des éléments de pixel (35) par rapport à la première ligne de référence (R1) varie de manière irrégulière sur toute l'étendue du panneau (41) le long de la première direction d'extension.

4. Dispositif de reproduction d'arrière-plan (15) selon l'une des revendications précédentes,
dans lequel les distances (b1, b2, b3, b4, b5, b6) des éléments de pixel (35) par rapport à la première ligne de référence (R1) ne forment pas un motif répétitif le long de la première direction d'extension (E1) ; et/ou les distances (b1, b2, b3, b4, b5, b6) des éléments de pixel (35) par rapport à la première ligne de référence (R1) sont distribuées normalement.

5. Dispositif de reproduction d'arrière-plan (15) selon l'une des revendications précédentes,
dans lequel une distance respective (a1, a2, a3, a4, a5, a6) des éléments de pixel (35), mesurée le long de la première direction d'extension (E1), par rapport à une deuxième ligne de référence (R2) qui est rectiligne le long de la deuxième direction d'extension (E2), varie de manière irrégulière le long de la deuxième direction d'extension (E2),
en particulier, les distances (a1, a2, a3, a4, a5, a6) des éléments de pixel (35) par rapport à la deuxième ligne de référence (R2) sont distribuées normalement.

6. Dispositif de reproduction d'arrière-plan (15) selon l'une des revendications précédentes,
dans lequel l'agencement bidimensionnel peut être subdivisé par plusieurs premières lignes de référence (R1) s'étendant le long de la première direction d'extension (E1) et disposées à une distance régulière (d) les unes des autres,
la distance régulière (d) correspond à une valeur moyenne des distances que présentent entre eux des éléments de pixel (35) voisins le long de la deuxième direction d'extension (E2),
chacun de la pluralité d'éléments de pixel (35) peut être attribué à une première ligne de référence (R1) respective à laquelle l'élément de pixel (35) est adjacent par rapport à la deuxième direction d'extension (E2),
une distance (b1, b2, b3, b4, b5, b6) entre chacune de la pluralité de premières lignes de référence (R1) et les éléments de pixel attribués respectifs (35) varie de manière irrégulière le long de la première direction d'extension (E1),
un nombre de la pluralité de premières lignes de référence (R1) correspond en particulier à un nombre d'éléments de pixel (35) qui sont disposés les uns derrière les autres dans l'agencement bidimensionnel le long de la deuxième direction d'extension (E2).

7. Dispositif de reproduction d'arrière-plan (15) selon la revendication 6, dans lequel une distance moyenne entre les éléments de pixel (35) et la première ligne de référence attribuée respective (R1) de la pluralité de premières lignes de référence (R1) est inférieure à un tiers de la distance régulière (d) ou inférieure à un dixième de la distance régulière (d).

8. Dispositif de reproduction d'arrière-plan (15) selon la revendication 6 ou 7, dans lequel une distribution des distances variables (b1, b2, b3, b4, b5, b6) entre la pluralité de premières lignes de référence (R1) et les éléments de pixels attribués respectifs (35) correspond à une distribution normale (71), en particulier, la distribution normale (71) est compatible avec une valeur attendue (73) de zéro et/ou présente en particulier une valeur attendue (73) de zéro.

9. Dispositif de reproduction d'arrière-plan (15) selon l'une des revendications précédentes,
dans lequel l'agencement bidimensionnel peut être subdivisé par plusieurs deuxièmes lignes de référence (R2) s'étendant le long de la deuxième direction d'extension (E2) et disposées à une distance régulière (d) les unes des autres,
la distance régulière (d) des deuxièmes lignes de référence (R2) correspond à une valeur moyenne de distances que présentent entre eux des éléments de pixel (35) voisins le long de la première direction d'extension (E1), chacun de la pluralité d'éléments de pixel (35) peut être attribué à une deuxième ligne de référence (R2) respective à laquelle l'élément de pixel (35) est adjacent par rapport à la première direction d'extension (E1),
une distance (a1, a2, a3, a4, a5, a6) entre chacune de la pluralité de deuxièmes lignes de référence (R2) et les éléments de pixel attribués respectifs (35) varie de manière irrégulière le long de la deuxième direction d'extension (E2),
en particulier, un nombre de la pluralité de deuxièmes lignes de référence (R2) correspond à un nombre d'éléments de pixel (35) qui sont disposés les uns derrière les autres dans l'agencement bidimensionnel le long de la deuxième direction d'extension (E2), et/ou
en particulier, une distance moyenne entre les éléments de pixel (35) et la deuxième ligne de référence attribuée respective (R2) de la pluralité de deuxièmes lignes de référence (R2) est inférieure à un tiers de la distance régulière (d) des deuxièmes lignes de référence (R2) entre elles ou inférieure à un dixième de la distance régulière (d), et/ou
en particulier, une distribution des éléments de pixel (35) par rapport à la pluralité de deuxièmes lignes de référence (R2) apparaît, en moyenne sur une grande surface, comme une structure régulière ; et/ou en particulier, une distribution des distances variables (a1, a2, a3, a4, a5, a6) entre la pluralité de deuxièmes lignes de référence (R2) et les éléments de pixel attribués respectifs (35) correspond à une deuxième distribution normale (71),
en particulier, la deuxième distribution normale (71) est compatible avec une valeur attendue (73) de zéro et/ou présente une valeur attendue (73) de zéro.

10. Dispositif de reproduction d'arrière-plan (15) selon l'une des revendications précédentes,
dans lequel le dispositif de reproduction d'arrière-plan (15) comprend un dispositif de commande (37), le dispositif de commande (37) étant relié à une mémoire (39) dans laquelle l'arrière-plan virtuel (21) est mis à disposition sous la forme d'une représentation dans une trame régulière (67), le dispositif de commande (37) étant conçu pour transformer l'arrière-plan virtuel mis à disposition (21) en coordonnées (K1, K2. K3) des éléments de pixel (35) dans l'agencement bidimensionnel,
en particulier, les coordonnées (K1, K2. K3) de la pluralité d'éléments de pixel (35) sont mémorisées dans la mémoire (39) et/ou peuvent être inscrites dans la mémoire (39), et/ou
en particulier, l'arrière-plan virtuel (21) est mis à disposition sous forme de modèle dans la mémoire (39) ; et/ou
en particulier, le dispositif de commande (37) est conçu pour commander les éléments de pixel (35) du panneau (41) individuellement et/ou par groupes d'éléments de pixel (35) voisins pour reproduire la représentation (19) de l'arrière-plan virtuel (21).

11. Dispositif de reproduction d'arrière-plan (15) selon la revendication 10, dans lequel le dispositif de commande (37) est conçu pour déterminer, au moyen de la transformation (T), à l'aide de l'arrière-plan virtuel (21) mis à disposition dans la trame régulière (67), une valeur de couleur respective et/ou une valeur de luminosité respective pour les éléments de pixel (35).

12. Dispositif de reproduction d'arrière-plan (15) selon la revendication 10 ou 11,
dans lequel le dispositif de commande (37) est conçu pour transformer l'arrière-plan virtuel (21) mis à disposition en les coordonnées (K1, K2, K3) des éléments de pixel (35) par une méthode du plus proche voisinage, par une interpolation bilinéaire et/ou par une interpolation bicubique.

13. Procédé de reproduction d'une représentation (19) d'un arrière-plan virtuel (21) au moyen d'un dispositif de reproduction d'arrière-plan (15) selon l'une des revendications précédentes, pour une prise de vue avec une caméra (23) dans un studio de prise de vue virtuel (13),
dans lequel le dispositif de reproduction d'arrière-plan (15) comprend au moins un panneau (41) avec une pluralité d'éléments de pixels (35) à éclairage actif, qui forment un agencement bidimensionnel irrégulier, l'arrière-plan virtuel (21) est mis à disposition sous la forme d'une représentation dans une trame régulière (67) et, pour la reproduction sur le dispositif de reproduction d'arrière-plan (15), est transformé en coordonnées (K1, K2. K3) des éléments de pixel (35) dans l'agencement bidimensionnel irrégulier.
